(19)

**Europäisches Patentamt**
**European Patent Office**
**Office européen des brevets**

(11) **EP 4 693 928 A1**

(12) **EUROPEAN PATENT APPLICATION**
published in accordance with Art. 153(4) EPC

(43) Date of publication:
**11.02.2026 Bulletin 2026/07**

(21) Application number: **23933904.7**

(22) Date of filing: **25.12.2023**

(51) International Patent Classification (IPC):
**H04B 7/0456** (2017.01)

(52) Cooperative Patent Classification (CPC):
**H04B 7/0456; H04B 7/06; H04W 4/80**

(86) International application number:
**PCT/CN2023/141412**

(87) International publication number:
**WO 2024/217041 (24.10.2024 Gazette 2024/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.04.2023 CN 202310469551**

(71) Applicant: **ZTE Corporation**
**Shenzhen, Guangdong 518057 (CN)**

(72) Inventors:
• **YANG, Jun**
  **Shenzhen, Guangdong 518057 (CN)**

• **CHEN, Yijian**
  **Shenzhen, Guangdong 518057 (CN)**
• **YU, Hongkang**
  **Shenzhen, Guangdong 518057 (CN)**
• **ZHANG, Shujuan**
  **Shenzhen, Guangdong 518057 (CN)**
• **JIAN, Mengnan**
  **Shenzhen, Guangdong 518057 (CN)**
• **LU, Zhaohua**
  **Shenzhen, Guangdong 518057 (CN)**

(74) Representative: **Aipex B.V.**
**Vestdijk 51**
**5611 CA Eindhoven (NL)**

(54) **CHANNEL INFORMATION FEEDBACK METHOD, ELECTRONIC DEVICE, AND STORAGE MEDIUM**

(57)   A channel information feedback method, an electronic device, and a storage medium, where the channel information feedback method includes: determining a measurement result of channel state information according to a measured reference signal (S110); determining a codebook, where the codebook includes a sub-codebook for r transmission layers, where r = 1, 2, ..., R, and R is a positive integer (S120); determining a codeword W from the codebook (S130); and feeding back indication information of the codeword W (S140), where the codeword W is a matrix of N rows and r columns formed by r column vectors $V_1$, $V_2$, ..., $V_r$ having a length of N, N > 1, and r ≥ 1; and the r column vectors of the codeword W are constructed according to the following basis vector model:

$$u = \begin{bmatrix} \alpha_1 v_1 \\ \alpha_2 v_2 \\ \alpha_3 v_3 \\ \vdots \\ \alpha_K v_K \end{bmatrix};$$

where the basis vector model u includes K sub-vectors, the length of a k-th sub-vector $v_k$ is $N_k$, $\alpha_k$ is a sub-vector coefficient, $K \geq 1$, $1 \leq k \leq K$, $N_k \geq 1$, and the value of K is determined based on the value of r.

EP 4 693 928 A1

**(Cont. next page)**

Determine a measurement result of channel state information according to a measured reference signal —— S110

Determine a codebook, wherein the codebook includes a sub-codebook, the number of layers of which is r, r = 1, 2, ..., R, and R is a positive integer —— S120

Determine a codeword W from the codebook —— S130

Feed back indication information of the codeword W —— S140

**FIG. 4**

**Description**

TECHNICAL FIELD

The present application relates to the field of wireless communications, for example, an information feedback method, an electronic device, and a storage medium.

BACKGROUND

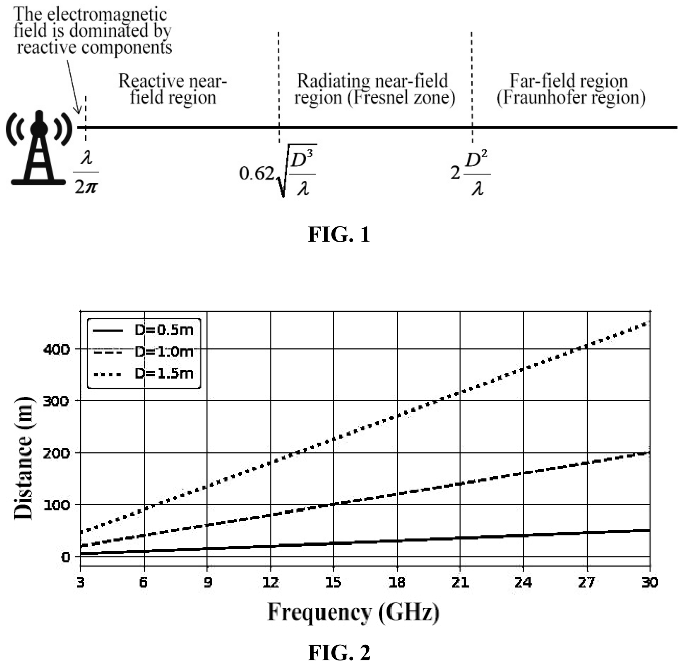

Multiple-input multiple-output (MIMO) technology is a wireless communication technology based on array antennas. In the conventional array antenna theory, the radiation region of an antenna is typically divided into a far-field region, a radiating near-field region, and a reactive near-field region, as shown in FIG. 1. In FIG. 1, D denotes the aperture of the array, and $\lambda$ denotes a carrier wavelength. When a signal transmitted by the antenna reaches the far-field region, the signal may be approximated as a plane wave. The plane wave approximation in the far-field region brings significant benefits to MIMO wireless communication, which not only simplifies the link budget but also reduces the complexity of beam control. Additionally, the number of parameters required for channel feedback is decreased, and the resource overhead is reduced. Communication standards assume that MIMO channels operate under far-field conditions. However, with the advancement of wireless communication technology, the diversification of wireless communication scenarios and the continuous growth in traffic demands have posed numerous challenges to wireless communications. To address these demands, wireless communication technology is increasingly developing towards higher frequency bands to obtain more spectrum resources while developing towards larger-scale transceiver arrays. As the array size gradually increases (that is, the aperture of the antenna expands) and the carrier frequency rises, traditional far-field transmission scenarios are increasingly becoming near-field transmission issues. As shown in FIG. 2, for an array with an aperture of 0.5 meters (m), the boundary between near and far fields is approximately 5 m from the center of the array at 3 GHz. When the frequency rises to 30 GHz, the boundary between near and far fields extends to about 50 m. When the aperture increases to 1.5 m, the boundary between near and far fields at 30 GHz is pushed out to 450 m. As a result, the vast majority of wireless communication scenarios fall within the near-field region of the array.

When a receiving terminal is located in the near-field region, the received signal no longer meets the plane wave approximation. If a transmitting array continues to configure a transmit precoding according to standard protocols, the received signal at the receiving terminal suffers significant gain loss. Although a series of near-field precoding feedback schemes have been proposed, these schemes have not been widely adopted due to high computational complexity and incompatibility with the standard protocols. How to perform channel state information feedback in the near-field region of array antennas has become an urgent problem to address. Partitioning a large array into multiple subarrays has become a processing approach of considerable interest. For a subarray, a user may be located in the far-field region, so the signals transmitted by each subarray still satisfy the plane wave assumption. The precoding method of the subarray may be implemented according to existing standards, offering good compatibility with communication protocols. However, existing research has not provided specific methods for subarray division or the corresponding codebook design for precoding. On the basis of the above, under the scenario of dividing a large array into multiple subarrays, no viable solution has been proposed for channel state information feedback.

SUMMARY

A main object of embodiments of the present application is to provide a channel information feedback method, an electronic device, and a storage medium, in which a subarray precoding method is provided to achieve channel state information feedback in near-field communication, thereby solving near-field communication issues and enhancing beamforming gain.

Embodiments of the present application provide a channel information feedback method. The method includes the following.

A measurement result of channel state information is determined according to a measured reference signal. A codebook is determined, where the codebook includes a sub-codebook for r transmission layers, r = 1, 2, ..., R, and R is a positive integer. A codeword W is determined from the codebook. Indication information of the codeword W is fed back. The codeword W is a matrix of N rows and r columns formed by r column vectors $V_1$, $V_2$, ..., $V_r$ having a length of N, N > 1, and r ≥ 1. The r column vectors of the codeword W are constructed according to the following basis vector model:

$$u = \begin{bmatrix} \alpha_1 v_1 \\ \alpha_2 v_2 \\ \vdots \\ \alpha_K v_K \end{bmatrix}.$$

In the above formula, the basis vector model u includes K sub-vectors, the length of a k-th sub-vector $v_k$ is $N_k$, $\alpha_k$ is a sub-vector coefficient, $K \geq 1$, $1 \leq k \leq K$, $N_k \geq 1$, and the value of K is determined according to the value of r.

Embodiments of the present application provide an electronic device. The electronic device includes one or more processors and a memory.

The memory is configured to store one or more programs. When the one or more programs are executed by the one or more processors, the one or more processors are caused to perform the channel information feedback method of any embodiment of the present application.

Embodiments of the present application further provide a computer-readable storage medium. The computer-readable storage medium stores one or more programs which, when executed by one or more processors, cause the one or more processors to perform the channel information feedback method of any embodiment of the present application.

BRIEF DESCRIPTION OF DRAWINGS

FIG. 1 is a diagram illustrating the division of an antenna radiation region according to embodiments of the present application;

FIG. 2 is a diagram illustrating the distance relationships between the near-field/far-field boundary to the array centers of different arrays at different frequency bands according to embodiments of the present application;

FIG. 3 is a diagram of subarray division according to embodiments of the present application;

FIG. 4 is a flowchart of a channel information feedback method according to embodiments of the present application;

FIG. 5 is an example diagram of a channel information feedback method according to embodiments of the present application;

FIG. 6 is an example diagram of MIMO subarrays according to embodiments of the present application;

FIG. 7 is an example diagram of the relationship between the number K of sub-vectors and the number r of transmission layers according to embodiments of the present application;

FIG. 8 is a structure diagram of a channel information feedback apparatus according to embodiments of the present application.

FIG. 9 is a structure diagram of an electronic device according to embodiments of the present application.

DETAILED DESCRIPTION

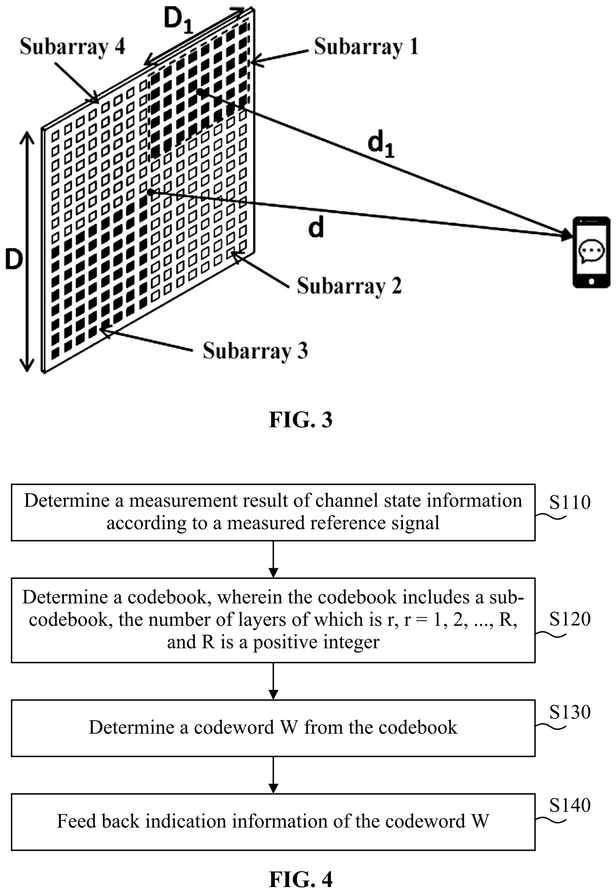

According to embodiments of the present application, a large MIMO array is divided into multiple subarrays, serving as a candidate solution to the near-field communication problem. As shown in FIG. 3, in this solution, a terminal is located in the near-field region of a MIMO array, that is, d is less than $2 D^2/\lambda$, but for the subarray 1, the distance $d_l$ from the terminal to the center point of the subarray 1 may be greater than $2 D_1^2/\lambda$. D denotes the aperture of the array. $D_1$ denotes the aperture of the subarray 1. In this case, a signal transmitted by each subarray may still be assumed to be a plane wave at the user location. The precoding of each subarray may be determined according to standards in the related art, thereby maintaining good compatibility with communication protocols in the related art. This scheme has a relatively low implementation cost and can achieve a significant near-field gain improvement. However, how to configure a subarray precoding codebook for this scenario has become a primary issue.

FIG. 4 is a flowchart of a channel information feedback method according to embodiments of the present application. This embodiment of the present application is applicable to a scenario where a MIMO array is divided into multiple subarrays to implement channel information feedback. This method can be executed by a channel information feedback apparatus. This apparatus can be implemented by software and/or hardware. As shown in FIG. 4, the method provided in the embodiments of the present application includes S110 to S140.

In S110, a measurement result of channel state information is determined according to a measured reference signal.

In the embodiments of the present application, the measurement result of the channel state information may be determined according to the measured reference signal. Specifically, the reference signal transmitted by the communication terminal may be received, and the measurement result of the channel state information may be determined through estimation of the reference signal. The reference signal may be a pilot signal used for channel estimation. The reference signal may be a known signal sequence. The sequence may be denoted as s. The received reference signal may be represented as:

$$y = Hs + n.$$

In the above formula, H denotes a channel matrix, y denotes a received signal vector, and n denotes a noise vector. The channel estimation may be performed based on the received reference information by means of minimum mean-square error (MMSE), low-order linear minimum mean-square error (LMMSE) or the like, and then the channel matrix H is determined and used as the channel state information. Since the dimension of H is generally large, directly feeding H back to a first communication node may cause a large overhead, and thus, the channel information generally needs to be quantized.

In S120, a codebook is determined, where the codebook includes a sub-codebook for r transmission layers, where r = 1, 2, ..., R, and R is a positive integer.

The codebook may be a codeword set and may include one or more sub-codebooks, and each sub-codebook may include one or more precoding codewords for configuring an MIMO array. The codebook includes at least one sub-codebook, and a sub-codebook of the at least one sub-codebook is for r transmission layers, where r is a positive integer. The codewords in the sub-codebook may be implemented through a basis vector model provided in the embodiments of the present application, and the basis vector model u includes K sub-vectors. All the codewords in the sub-codebook may be implemented through the basis vector model, or only a part of the codewords in the sub-codebook may be implemented through the basis vector model.

In the embodiments of the present application, one or more codebooks may be pre-configured based on communication transmission scenarios and communication transmission requirements, and the codebook used for feeding back the channel state information may be selected from the one or more codebooks. Specifically, in some embodiments, the codebook may be determined based on the measurement result of the channel state information; or, the maximum number of transmission layers of a current channel may be determined based on a rank of the channel matrix H or channel quality indicator information, and then an appropriate codebook is determined.

In S130, a codeword W is determined from the codebook.

A codeword may be selected from the codebook according to the measurement result for configuring the precoding of the MIMO array and for information transmission. One codeword in the codebook may correspond to one piece of spatial channel information, so the channel information may be obtained through the codeword information fed back. The selected codeword W generally should match the channel measurement result for better beamforming gain.

In some embodiments of the present application, the operation of the codeword is determined from the codebook includes the following.

The number r of transmission layers is determined according to the measurement result and/or a configuration signaling, and the codeword is selected from the sub-codebook corresponding to the number r of transmission layers.

On the basis of the above embodiments of the present application, the operation of the codeword is determined from the codebook includes: the number r of transmission layers is determined according to the measurement result, and the codeword is selected from the sub-codebook corresponding to the number r of transmission layers.

On the basis of the above embodiments of the present application, the operation of the codeword is determined from the codebook includes: the number r of transmission layers is determined according to the configuration signaling, and the codeword is selected from the sub-codebook corresponding to the number r of transmission layers.

On the basis of the above embodiments of the present application, the operation of the codeword is determined from the codebook includes: the number r of transmission layers is determined according to the measurement result and the configuration signaling, and the codeword is selected from the sub-codebook corresponding to the number r of transmission layers.

In the embodiments of the present application, the codeword W may be a matrix of N rows and r columns formed by r column vectors $V_1$, $V_2$, ..., $V_r$ having a length of N, and the column vectors in the codeword may be implemented through a basis vector model. The basis vector model is represented as follows:

$$u = \begin{bmatrix} \alpha_1 v_1 \\ \alpha_2 v_2 \\ \vdots \\ \alpha_K v_K \end{bmatrix}.$$

In the above formula, the basis vector model u includes K sub-vectors, the value of K is determined according to the value of r, the length of each sub-vector may be $N_k$, and $\alpha_k$ is a sub-vector coefficient, where $K \geq 1$, $N_k \geq 1$, $1 \leq k \leq K$, and the sum of the lengths of all sub-vectors may be N. The basis vector model is divided into K sub-vectors, and each sub-vector may correspond to the precoding of one subarray. Specifically, the sub-vector $v_k$ represents a precoding vector used for array beam control and may be selected from one or more given basis vector sets. When the precoding is loaded to one subarray of the MIMO array, the precoding may enable the subarray to radiate a directional beam in a specified direction or a group of directional beams in specified directions. The subarrays may be logically divided subarrays, may be physically isolated subarrays or may be spatially separated subarrays with certain distances between them.

In S140, indication information of the codeword W is fed back, where the codeword W is a matrix of N rows and r columns formed by r column vectors $V_1$, $V_2$, ..., $V_r$ having a length of N, N > 1, and $r \geq 1$; the r column vectors of the codeword are constructed according to the following basis vector model:

$$u = \begin{bmatrix} \alpha_1 v_1 \\ \alpha_2 v_2 \\ \alpha_3 v_3 \\ \vdots \\ \alpha_K v_K \end{bmatrix}.$$

The basis vector model u includes K sub-vectors, the length of a k-th sub-vector $v_k$ is $N_k$, $\alpha_k$ is a sub-vector coefficient, $K \geq 1$, $1 \leq k \leq K$, $N_k \geq 1$, and the value of K is determined according to the value of r.

The indication information of the codeword determined in S140 may be determined, and the codebook used by the communication terminal for communication is indicated through the indication information. Since the codebook includes one or more precoding vectors, directly feeding back the codebook may cause significant channel resource overhead, and then the channel overhead for codebook transmission may be reduced through the indication information. The indication information may be used for indicating the codeword, and a first communication terminal receiving the indication information may select the corresponding codeword from the codebook for precoding configuration according to the indication parameter. The indication information may be in the form of numerical values or identifiers. In the embodiments of the present application, the number of sub-vectors in the basis vector model may be determined according to the number r of transmission layers of the sub-codebook, where the codeword is located in the sub-codebook.

In massive MIMO communication, one advantage is the ability to achieve better spatial multiplexing, thereby serving more users. For a single user, multilayer transmission can also be achieved. The number of transmission layers in the multilayer transmission refers to the number of independent data streams that may be simultaneously transmitted when a MIMO communication system communicates with a user. For example, in a two-layer transmission, one transmission layer may be used for transmitting a voice data stream, while the other transmission layer may be used for transmitting an image data stream. In wireless communication standards, a codeword in the precoding codebook may include multiple column vectors, where the number of column vectors indicates the number r of transmission layers supported by the codeword. Each column vector is the precoding vector for the corresponding transmission layer.

On the basis of traditional MIMO technology, the MIMO array is divided into subarrays in the present application, and the corresponding basis vector model is determined according to the subarray structure, where each subarray has its corresponding subarray precoding, and the precoding of each subarray corresponds to a sub-vector in a codeword column vector. If a MIMO array is divided into K subarrays, one column vector in a precoding codebook is constructed by K sub-vectors, and the column vectors may be determined through the basis vector model including K sub-vectors.

The number r of transmission layers supported by a codeword, which is also the number r of column vectors, may be used for determining the number K of subarrays. In a practical wireless communication environment, the number of transmission layers generally reflects the richness of the multipath in a wireless channel. This information may be used for determining a transmission strategy suitable for the current wireless environment and, in turn, may serve as the basis for subarray division and be used for determining the number of sub-vectors in the column vector of the codeword.

In the embodiments of the present application, subarray division may be determined based on the number r of transmission layers to facilitate the determination of near-field subarray precoding, and thus, a more rational precoding codebook may be designed for multilayer transmission, thereby enhancing the accuracy of channel state characterization and improving near-field transmission performance.

On the basis of the above embodiments of the present application, the codebook includes at least two sub-codebooks $CB_{r1}$ and $CB_{r2}$, and the sub-codebook $CB_ri$ and the sub-codebook $CB_{r2}$ satisfy: at least one column vector of a codeword in the sub-codebook $CB_{r1}$ is constructed according to a basis vector $u_1$, the basis vector $u_1$ includes $K_1$ sub-vectors, at least one column vector of a codeword in the sub-codebook $CB_{r2}$ is constructed according to a basis vector $u_2$, and the basis vector $u_2$ includes $K_2$ sub-vectors, where $r_1$ is not equal to $r_2$, $K_1$ is not equal to $K_2$, and the basis vector $u_1$ and the basis vector $u_2$ satisfy the basis vector model u.

In the embodiments of the present application, the codebook includes at least two sub-codebooks, the column vectors of the codewords in each sub-codebook may be constructed by different basis vectors satisfying the basis vector model, codewords in different sub-codebooks have different numbers of column vectors, and the basis vectors used for constructing the column vectors of these codewords in different sub-codebooks include different numbers of sub-vectors.

The basis vectors used for constructing the column vectors of the codewords in the codebook may be divided into different basis vector groups according to the sub-codebooks to which the codewords belong. Basis vectors belonging to different basis vector groups are used for constructing the column vectors of codewords in different sub-codebooks, and basis vectors belonging to different groups include different numbers of sub-vectors. Here, the number of sub-vectors in the basis vector is determined according to the number r of transmission layers supported by the sub-codebook, and r is also equal to the number of column vectors of the codewords in the sub-codebook.

In some embodiments, a column vector of a codeword is constructed by at least two basis vectors. At this point, the basis vectors used for constructing the column vectors of codewords in the same sub-codebook may also be divided into multiple basis vector groups, and the number of sub-vectors in at least one basis vector group is different from the number of sub-vectors in a basis vector group belonging to another sub-codebook.

On the basis of the above embodiments of the present application, the number K of sub-vectors and the number r of transmission layers satisfy: $r_1$ is greater than $r_2$, and $K_1$ corresponding to $r_1$ is less than $K_2$ corresponding to $r_2$.

In the embodiments of the present application, the number K of sub-vectors in the basis vector model may increase as the number r of transmission layers of the codebook increases, and the number r of transmission layers is the same as the number r of column vectors in the codewords. Specifically, a greater number of sub-vectors serving as precoding vectors leads to a more accurate characterization of near-field communication and provides a better near-field focusing effect, thereby enhancing the array gain.

On the basis of the above embodiments of the present application, the number K of sub-vectors linearly increases with the number r of transmission layers, and $K = a + b*r$, where a is a preset real number, and b is greater than 0.

The number of sub-vectors K in the sub-codebook of the codebook may be proportional to the number r of transmission layers to enable the near-field communication scenario to include sub-vectors with more precoding vectors to characterize the near-field channel, thereby improving the near-field focusing effect. In the embodiments of the present application, the number K of sub-vectors may linearly increase with the number r of transmission layers, that is, K and r satisfy the following relationship:

$$K = a + b*r.$$

In the above formula, a and b are preset real numbers, and b is greater than 0.

In some other embodiments of the present application, the number K of sub-vectors nonlinearly increases with the number r of transmission layers, and $K = f_1(r)$, where $f_1(r)$ is a nonlinear monotonically increasing function, and $r > 0$.

In the embodiments of the present application, the number K of sub-vectors may nonlinearly increase with the number r of transmission layers, that is, the values of K and r satisfy a nonlinear monotonically increasing function, $K = f_1(r)$. For example, in some embodiments, $f_1(r)$ may be $a_1 r^2$, $a_2 r^3$ or the like, where $a_1$ and $a_2$ are greater than 0. The number K of sub-vectors and the number r of transmission layers may satisfy the above nonlinear monotonically increasing function $f_1(r)$, and the number K of sub-vectors may increase as the number r of transmission layers increases.

In some embodiments of the present application, the number K of sub-vectors and the number r of transmission layers satisfy: $r_1$ is greater than $r_2$, and $K_1$ corresponding to $r_1$ is greater than $K_2$ corresponding to $r_2$.

In the embodiments of the present application, the number K of sub-vectors in the basis vector model may decrease as the number r of transmission layers of the codebook increases, and the number r of transmission layers is the same as the number r of column vectors. Since a higher number of sub-channels leads to a corresponding increase in the indication information for each sub-vector in the channel state feedback information, the feedback overhead of the channel state is increased. Furthermore, if the number of sub-vectors in codewords for different transmission layers is inconsistent, an imbalance in overhead arises. Therefore, the number K of sub-vectors in the basis vector model may be set to decrease as the number r of transmission layers of the codebook increases.

In some embodiments of the present application, the number K of sub-vectors linearly decreases with the number r of transmission layers, and K = c - d*r, where c is a preset real number, and d is greater than 0.

The number K of sub-vectors may linearly decrease with the number r of transmission layers, and the number of sub-vectors and the number r of transmission layers may satisfy: K = c - d*r, where c is a preset real number, and d is greater than 0.

In some other embodiments of the present application, the number K of sub-vectors nonlinearly decreases with the number r of transmission layers, and K = $f_2(r)$, where $f_2(r)$ is a nonlinear monotonically decreasing function, and r > 0.

In the embodiments of the present application, the number K of sub-vectors may also decrease as the number r of transmission layers increases. Specifically, the number K of sub-vectors may nonlinearly decrease with the number r of transmission layers increases, and K = $f_2(r)$, where $f_2(r)$ is a nonlinear monotonically decreasing function, for example, K = $a_3/r^2$ or K = $a_4/r^3$, where $a_3$ and $a_4$ are greater than 0, and r > 0.

In some embodiments of the present application, the operation where the value of K is determined according to the value of r includes: the value of K is determined according to a value set of r.

In the embodiments of the present application, the number K of sub-vectors may be determined according to a value set of the number r of transmission layers. Different value sets of the number r of transmission layers may be configured with different numbers K of sub-vectors. One or multiple values of the number r of transmission layers may be grouped into the same value set, in which one or multiple values of the number r may correspond to the same number K of sub-vectors.

In some other embodiments of the present application, the operation where the value of K is determined according to the value of r includes: a value set of K is determined according to the value of r.

One or more value sets of the number K of sub-vectors may exist, the value of r may correspond to different value sets of the number K of sub-vectors, and thus, the value of r may be determined according to the value set corresponding to the number K of sub-vectors. For the same number r of transmission layers, the number K of sub-vectors in the codeword may take different values, that is, codewords with the same number r of transmission layers may be constructed by column vectors with different numbers of sub-vectors.

In some embodiments of the present application, the basis vector module u satisfies the following relationship: at least one subset $FS_1$ of a set FS = [$v_1$, $v_2$, ..., $v_k$, $\alpha_1$, $a_2$, ..., $\alpha_K$] is determined according to a subset $FS_2$, where i = 1, 2, ..., K. The set FS includes a sub-vector coefficient $\alpha_i$ and a sub-vector $v_i$ in the basis vector model u.

In the embodiments of the present application, for the subset $FS_1$ and the subset $FS_2$, the value of one of the subset $FS_1$ and the subset $FS_2$ is determined according to the value of the other one of the subset $FS_1$ and the subset $FS_2$ in the following manner: the value of the subset $FS_1$ may determine according to the value of the subset $FS_2$; or, the value of the subset $FS_2$ may determine according to the value of the subset $FS_1$. The subset $FS_1$ includes all sub-vectors of the basis vector, the subset $FS_2$ includes all sub-vector coefficients of the basis vector, and all the sub-vectors of the basis vector may be determined according to all the sub-vector coefficients of the basis vector. The subset $FS_1$ includes a part of the sub-vectors of the basis vector, and the subset $FS_2$ includes a part of the sub-vector coefficients, and the part of the sub-vectors of the basis vector may be determined according to the part of the sub-vector coefficients included in another subset.

In some embodiments of the present application, the indication information includes at least one indication parameter for a sub-vector and a sub-vector coefficient in the basis vector model u.

In the embodiments of the present application, the indication information fed back may include an indication parameter indicating the sub-vector and the sub-vector coefficient in the basis vector model, and the indication parameter may instruct the first communication node receiving the indication information to determine the codeword according to the indication parameter for the sub-vector and the sub-vector coefficient.

In some embodiments of the present application, an indication parameter of at least one indication parameter simultaneously indicates two elements in the set FS, where the set FS includes the sub-vector coefficient $\alpha_i$ and the sub-vector $v_i$ in the basis vector model u, and i = 1, 2, ..., K.

An indication parameter of at least one indication parameter simultaneously indicates two elements in the set FS, where the set FS includes the sub-vector coefficient $\alpha_i$ and the sub-vector $v_i$ in the basis vector model u, and i = 1, 2, ..., K.

In some embodiments of the present application, the sub-vectors in the basis vector model u have the same length.

In the embodiments of the present application, the length of each sub-vector in the basis vector model u is the same, thereby simplifying the codeword model and reducing the configuration parameters required in the codeword generation process.

In some embodiments of the present application, the lengths of the sub-vectors in the basis vector model u are different.

The lengths of the sub-vectors in the basis vector model u may be different to allow the codeword-described MIMO subarrays to include different numbers of antenna elements, thereby enhancing the accuracy of channel characterization and improving the performance of the MIMO array.

In some embodiments of the present application, the k-th sub-vector $v_k$ of the basis vector model u satisfies the

following form:

$$v_k = \begin{cases} \begin{bmatrix} 1 & e^{j\theta_k} & \cdots & e^{j(N_k-1)\theta_k} \end{bmatrix}, & N_k > 1, \\ 1, & N_k = 1, \end{cases}$$

where $\theta_k$ is a real number, and j is an imaginary unit.

In the embodiments of the present application, when the sub-vectors of the basis vector model have a length of 1, the sub-vectors may be 1; when the lengths of the sub-vectors are greater than 1, the sub-vectors may be $\begin{bmatrix} 1 & e^{j\theta_k} & \cdots & e^{j(N_k-1)\theta_k} \end{bmatrix}$, where $\theta_k$ is a real number, and j is an imaginary unit.

In some other embodiments of the present application, the k-th sub-vector $v_k$ of the basis vector model u is formed by the Kronecker product of two basis vectors $v_{k1}$ and $v_{k2}$, where the two basis vectors each satisfy the following form:

$$v_k = \begin{cases} \begin{bmatrix} 1 & e^{j\theta_k^{(1)}} & \cdots & e^{j\theta_k^{(N_k-1)}} \end{bmatrix}, & N_k > 1, \\ 1, & N_k = 1, \end{cases}$$

where $\Theta_{kl}$ is a real number, j is an imaginary unit, 1 E [1, 2], and $N_{k1}*N_{k2} = N_k$.

In the embodiments of the present application, the sub-vectors of the basis vector model may be the Kronecker product of two basis vectors, and the product of the lengths of two basis vectors may be the lengths of the sub-vectors of the basis vector model. When the sub-vectors have a length of 1, the sub-vectors may be 1; when the lengths of the sub-vectors are greater than 1, the sub-vectors may be $\begin{bmatrix} 1 & e^{j\theta_k} & \cdots & e^{j(N_k-1)\theta_k} \end{bmatrix}$, where $\theta_k$ is a real number, and j is an imaginary unit.

In some embodiments of the present application, the k-th sub-vector $v_k$ of the basis vector model u satisfies the following form:

$$v_k = \begin{cases} \begin{bmatrix} 1 & e^{j\theta_k^{(1)}} & \cdots & e^{j\theta_k^{(N_k-1)}} \end{bmatrix}, & N_k > 1, \\ 1, & N_k = 1, \end{cases}$$

where $\theta_k^{(n)} = \xi_k + n\eta_k + n^2\zeta_k$, $\xi_k$, $\eta_k$ and $\zeta_k$ are preset real-valued constants, j is an imaginary unit, and $1 \le n \le N_k$.

When the lengths of the sub-vectors of the basis vector model are greater than 1, the values of the sub-vectors of the basis vector model are determined through $\begin{bmatrix} 1 & e^{j\theta_k} & \cdots & e^{j(N_k-1)\theta_k} \end{bmatrix}$, and $\theta_k^{(n)}$ may be determined through $\theta_k^{(n)} = \xi$, and the three preset real-valued constants $\xi_k$, $\eta_k$ and $\zeta_k$.

In some embodiments of the present application, the k-th sub-vector $v_k$ of the basis vector model u is formed by the Kronecker product of two basis vectors $v_{k1}$ and $v_{k2}$, where the two basis vectors each satisfy the following form:

$$v_k = \begin{cases} \begin{bmatrix} 1 & e^{j\theta_k^{(1)}} & \cdots & e^{j\theta_k^{(N_k-1)}} \end{bmatrix}, & N_k > 1, \\ 1, & N_k = 1, \end{cases}$$

where $\theta_{kl}^{(n)} = \xi_{kl} + n\eta_{kl} + n^2\zeta_{ki}$, $\xi_{kl}$, $\eta_{k1}$ and $\zeta_{k1}$ are preset real-valued constants, j is an imaginary unit, $1 \in [1, 2]$, $1 \le n \le N_{k1}$, and $N_{k1}*N_{k2} = N_k$.

The sub-vectors of the basis vector model may be the Kronecker product of two basis vectors, and when the lengths of the sub-vectors are greater than 1, the values of two basis vectors are determined through $\begin{bmatrix} 1 & e^{j\theta_k^{(1)}} & \cdots & e^{j\theta_k^{(N_k-1)}} \end{bmatrix}$,

where $\theta_k^{(n)}$ may be determined through $\theta_k^{(n)} = \xi_k + n\eta_k + n^2\zeta_k$ and the three preset real-valued constants $\xi_k$, $\eta_k$ and $\zeta_k$.

In some embodiments of the present application, the i-th column vector $V_i$ of the codeword W is a column vector satisfying the basis vector model u, where i = 1, 2, ..., r.

The codeword W may include r column vectors. Each column vector may be determined through the basis vector model u, that is, each column vector $V_i$ may be constructed by the column vector of the basis vector model u.

For example, the column vectors of the codeword satisfy the basis vector model u, that is, the i-th column vector $V_i$ of the codeword W is:

$$V_i = u_i = \begin{bmatrix} \alpha_{i1}v_{i1} \\ \alpha_{i2}v_{i2} \\ \vdots \\ \alpha_{iK}v_{iK} \end{bmatrix}.$$

In the above formula, $u_i$ satisfies the structure of the basis vector model u, and i = 1, 2, ..., r.

In some other embodiments of the present application, the i-th column vector $V_i$ of the codeword W is formed by the Kronecker product of two vectors $u_1$ and $u_2$, where $u_1$ and $u_2$ are column vectors satisfying the basis vector model u.

In the embodiments of the present application, the r column vectors constituting the codeword W may be formed by the Kronecker product of two vectors $u_1$ and $u_2$, respectively, and $u_1$ and $u_2$ are column vectors satisfying the basis vector model u.

For example, the i-th column vector $V_i$ of the codeword W is formed by the Kronecker product of two vectors $u_{il}$ and $u_{i2}$, that is, $V_i = u_{il} \otimes u_{i,2}$ where $u_{i1}$ and $U_{i2}$ satisfy the structure of the basis vector model u:

$$u_{i1} = \begin{bmatrix} \alpha_{i1,1}v_{i1,1} \\ \alpha_{i1,2}v_{i1,2} \\ \vdots \\ \alpha_{i1,K1}v_{i1,K1} \end{bmatrix}, u_{i2} = \begin{bmatrix} \alpha_{i2,1}v_{i2,1} \\ \alpha_{i2,2}v_{i2,2} \\ \vdots \\ \alpha_{i2,K2}v_{i2,K2} \end{bmatrix}.$$

In the above formula, K ≥ 1, and K2 ≥ 1.

In some other embodiments of the present application, the i-th column vector $V_i$ of the codeword W is generated by a weighted sum of M column vectors:

$$V_i = \sum_{m=1}^{M} \beta_m w_m.$$

In the above formula, $\beta_m$ is a weight coefficient, $u_m$ is a column vector satisfying the basis vector model u, i = 1, 2, ..., r, and m = 1, 2, ..., M.

The column vector in the codeword W may be generated by a weighted sum of multiple column vectors. The column vectors participating in the weighted summation may be column vectors satisfying the basis vector model, and the weight coefficients corresponding to the column vectors participating in the weighted summation may be the same or different.

In some other embodiments of the present application, the i-th column vector $V_i$ of the codeword W is generated by a weighted sum of M column vectors:

$$V_i = \sum_{m=1}^{M} \beta_m w_m.$$

In the above formula, $\beta_m$ is a weight coefficient, $w_m$ is formed by the Kronecker product of two column vectors $u_{m1}$ and $u_{m2}$, $u_{m1}$ and $u_{m2}$ are column vectors satisfying the basis vector model u, i = 1, 2, ..., r, and m = 1, 2, ..., M.

In the embodiments of the present application, the column vector in the codeword W may be generated by a weighted sum of multiple column vectors. The column vectors participating in the weighted summation may be the Kronecker product of two column vectors satisfying the basis vector model, and the weight coefficients corresponding to the column vectors participating in the weighted summation may be the same or different.

In the above embodiments, the weight coefficient $\beta_m$ may be a preset value. For example, in one case, the weight coefficient satisfies $\sum_{m=1}^{M} \beta_m = 1$, and $\beta_m = 1/M$. For example, in another case, the weight coefficient $\beta_m$ is determined according to the value of M. For example, when M = 2, $\beta_i$ = 0.6, and $\beta_2$ = 0.4; when M = 3, $\beta_1$ = 0.5, $\beta_2$ = 0.3, and $\beta_3$ = 0.2.

In some other embodiments of the present application, the i-th column vector $V_i$ of the codeword W satisfies the following form:

$$V_i = \begin{bmatrix} c_1 V_{i1} \\ c_2 V_{i2} \\ \vdots \\ c_S V_{iS} \end{bmatrix}.$$

In the above formula, $c_s$ is a coefficient, $V_{is}$ is a sub-vector, and $V_{is}$ is generated according to at least one of the following manners, where s = 1, 2, ..., S.

$V_1$, is directly generated according to the basis vector model u; $V_1$, is formed by the Kronecker product of two vectors $u_i$ and $u_2$, where $u_1$ and $u_2$ are column vectors satisfying the basis vector model u; $V_{is}$ is generated by a weighted sum of M column vectors of the basis vector model according to $V_{is} = \sum_{m=1}^{M} \beta_m u_m$, where $\beta_m$ is a weight coefficient, $u_m$ is a column vector satisfying the basis vector model u, i = 1, 2, ..., r, and m = 1, 2, ..., M; or $V_{is}$ is generated by a weighted sum of M column vectors of the basis vector model according to $V_{is} = \sum_{m=1}^{M} \beta_m w_m$, where $\beta_m$ is a weight coefficient, $w_m$ is formed by the Kronecker product of two column vectors $u_{m1}$ and $u_{m2}$, $u_{m1}$ and $u_{m2}$ are column vectors satisfying the basis vector model u, i = 1, 2, ..., r, and m = 1, 2, ..., M.

The coefficient $c_s$ may be a preset value. In a communication scenario, $c_s$ is a fixed constant, for example, $c_s$ = 1; or $\phi$; is a constant greater than 0 and less than 1 and increases with the index s. In another communication scenario, $C_s$ is determined according to the indication information.

Specifically, the r column vectors constructing the codeword W may include multiple sub-vectors. Each sub-vector has a corresponding coefficient, and each sub-vector may be implemented through the basis vector model. The manner for generating sub-vectors through the basis vector model includes at least one of the following: a vector corresponding to the basis vector model is directly taken as a sub-vector; the Kronecker product of two vectors satisfying the basis vector model is taken as a sub-vector; the weighted sum of multiple vectors satisfying the basis vector model is taken as a sub-vector; or the weighted sum of multiple vectors is taken as a sub-vector, where each vector is the Kronecker product of two vectors satisfying the basis vector model.

In the above embodiments, the weight coefficient $\beta_m$ may be a preset value. For example, in one case, the weight coefficient satisfies $\sum_{m=1}^{M} \beta_m = 1$, and $\beta_m$ = 1/M. For example, in another case, the weight coefficient $\beta_m$ is determined according to the value of M. For example, when M = 2, $\beta_i$ = 0.6, and $\beta_2$ = 0.4; when M = 3, $\beta_1$ = 0.5, $\beta_2$ = 0.3, and $\beta_3$ = 0.2.

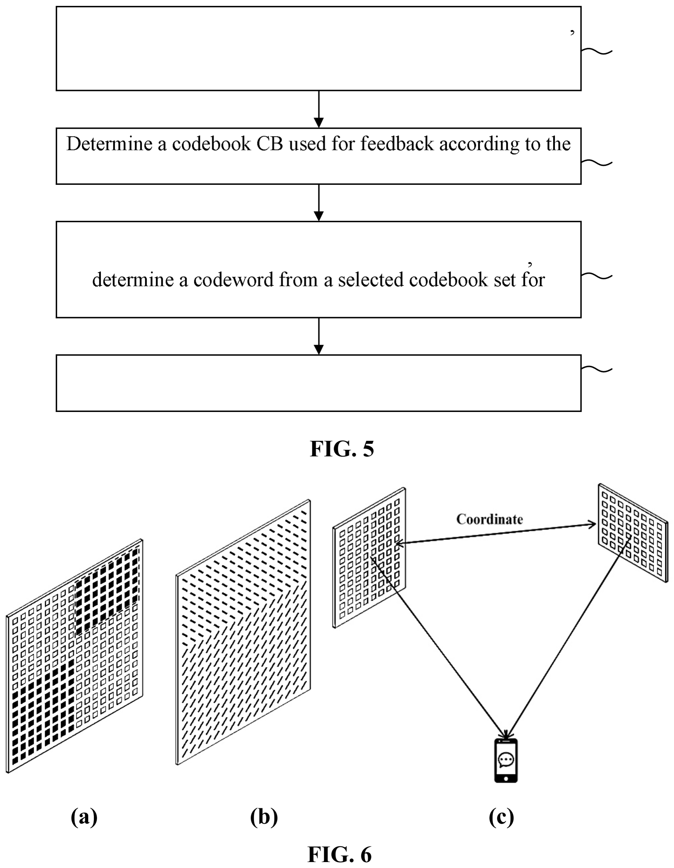

In an example embodiment, FIG. 5 is an example diagram of a channel information feedback method according to an embodiment of the present application. Referring to FGI. 5, the method provided in the embodiments of the present application specifically includes S1 to S4.

In S1, a reference signal sent by the first communication node is received, and channel estimation is performed according to the received reference signal to obtain channel information.

The reference signal may be a pilot signal used for channel estimation, and such a signal is a known signal sequence. The sequence is denoted as s, and then the received signal may be denoted as:

$$y = Hs + n.$$

In the above formula, H denotes a channel matrix, y denotes a received signal vector, and n denotes a noise vector. The channel estimation may be performed through an algorithm such as minimum mean-square error or low-order linear minimum mean-square error, and then the channel matrix H is obtained. Since the dimension of H is generally large, directly feeding H back to the first communication node may cause a large overhead, and thus, the channel information generally needs to be quantized.

In S2, a codebook CB used for feedback is determined according to the obtained channel information.

The codebook CB is a codeword set and includes multiple sub-codebooks. Each sub-codebook includes multiple precoding codewords for configuring the MIMO array, and among the sub-codebooks, at least one sub-codebook $CB_r$ has a number r of transmission layers, where r = 1, 2, ..., R, and R is a positive integer. All the codewords of the sub-codebook may be generated according to the codeword model provided by the present application, or a part of the codewords may be generated through other models.

In the embodiments of the present application, according to different transmission scenarios and transmission requirements, multiple codebooks are generally preset, and an appropriate codebook needs to be determined according to the obtained channel information. For example, the maximum number of transmission layers of a current channel may be determined according to a rank of the channel matrix H or corresponding channel quality indicator information, and then an appropriate codebook is determined.

In S3, r is determined according to the measurement result and/or the configuration signaling of the first communication node, and a codeword is determined from the selected codebook for characterizing the current channel.

A codebook essentially is a quantization form of spatial channels. The codewords included in the codebook represent information about specific spatial channels. A codeword that matches the current channel needs to be selected from the codebook for information transmission.

In an embodiment, r may be determined according to the measurement result of the channel information, and the codeword W for feedback is further determined from the sub-codebook $CB_r$ according to r and the channel information.

In another embodiment, the configuration signaling of the first communication node may be received, r may be determined according to the configuration signaling, and the codeword W for feedback may further be determined from the sub-codebook $CB_r$ according to r and the channel information.

In another embodiment, r needs to be determined according to the measurement result of the channel information and the configuration signaling of the first communication node, and the codeword W for feedback is further determined from the sub-codebook $CB_r$ according to r and the channel information.

The codeword in the embodiments of the present application may be determined according to the basis vector model, and the codeword is a matrix of N rows and r columns and includes r column vectors $V_1$, $V_2$, ..., and $V_r$ having a length of N, where N > 1, and the matrix of r columns may be constructed according to the basis vector model. The basis vector model is expressed as follows:

$$u = \begin{bmatrix} \alpha_1 v_1 \\ \alpha_2 v_2 \\ \vdots \\ \alpha_K v_K \end{bmatrix}.$$

The basis vector model may include the sub-vector $v_k$ and the sub-vector coefficient $\alpha_k$, where k = 1, 2, ..., K, the length of the sub-vector $v_k$ is $N_k$, and the sum of the lengths of the sub-vectors is N. The basis vector model is divided into K sub-vectors, and each sub-vector may correspond to the precoding of one subarray. Specifically, the sub-vector $v_k$ represents a precoding vector used for array beam control and may be selected from one or more given basis vector sets. When the precoding is loaded to one subarray of the MIMO array, the precoding may enable the subarray to radiate a directional beam in a specified direction or a group of directional beams in specified directions. The subarrays may be logically divided subarrays, may be physically isolated subarrays or may be spatially separated subarrays with certain distances between them. FIG. 6 illustrates three typical forms of subarrays, among which FIG. 6(a) is subarrays logically or physically divided on a complete MIMO array, FIG. 6(b) shows dual-polarized separated subarrays, and FIG. 6(c) is a distributed coordinated subarray configuration. The basis vector model provided by the present application may be used for constructing precoding codebooks suitable for the above subarray forms and precoding codebooks suitable for future antenna arrays with new types of subarray division.

In the embodiments of the present application, the number of sub-vectors in the basis vector model u may be determined according to the number r of transmission layers, thereby serving more users in massive MIMO communication by means of spatial multiplexing. For a single user, multilayer transmission can also be achieved. The number of transmission layers in the multilayer transmission refers to the number of independent data streams that may be simultaneously transmitted when a MIMO communication system communicates with a user. For example, in a two-layer transmission, one transmission layer may be used for transmitting streaming voice information, while the other transmission layer may be used for transmitting an image data stream. In wireless communication standards, a codeword in the precoding codebook may include multiple column vectors, where the number of column vectors indicates the number r of transmission layers supported by the codeword. Each column vector is the precoding vector for the corresponding transmission layer.

On the basis of traditional MIMO technology, the MIMO array is divided into subarrays in the present application, and a corresponding codeword column vector model is designed according to the subarray structure, where each subarray has its corresponding subarray precoding, and the precoding of each subarray corresponds to a sub-vector of a basis vector in a codeword column vector. If a MIMO array is divided into K subarrays, one column vector in the precoding codeword is constructed by a basis vector including K sub-vectors.

The number of transmission layers supported by the codeword, which is also the number r of column vectors, is used for determining the number K of subarrays. In a practical wireless communication environment, the number of transmission layers generally reflects the richness of the multipath in a wireless channel. This information may be used for determining a transmission strategy suitable for the current wireless environment and, in turn, may serve as the basis for subarray division and be used for determining the number of sub-vectors in the column vector of the codeword.

The number of sub-vectors in the basis vector model u may be determined according to the number r of transmission layers in the following manners.

1. The number of sub-vectors increases as the number of transmission layers increases.

A typical application scenario for dividing a MIMO array into subarrays is near-field communication. A larger number of sub-vectors in the precoding vector enable more accurate characterization of the near-field channel, and thus, the near-field focusing performance becomes better, thereby achieving a higher-order spatial multiplexing effect. Therefore, for multilayer transmission, a greater number of sub-vectors result in less inter-layer interference and higher communication rates. Based on the above, a feasible subarray division strategy is to make the number of subarrays proportional to the number of transmission layers, such that the number K of sub-vectors in the column vectors of the codeword and r satisfy the following relationship:

$$K = a + b*r.$$

In the above formula, a and b are preset constants, b is a constant greater than 0, and r is an integer greater than or equal to 1.

For example, in a scenario, when a = 3 and b = 1, the relationship between the number of sub-vectors of column vectors in the codeword and r is shown in Table 1.

Table 1 Example table showing the number of sub-vectors increasing with the number r of transmission layers.

| The number r of transmission layers | 1 | 2 | 3 | 4 | 5 | 6 | 7 | 8 |
|---|---|---|---|---|---|---|---|---|
| The number K of sub-vectors | 4 | 5 | 6 | 7 | 8 | 9 | 10 | 11 |

An example in which the number of sub-vectors linearly increases with r is given above, and in fact, the number of sub-vectors may also nonlinearly increase with r, such as $K = a_1*r^2$ or $K = a_2*r^3$, where $a_1$ and $a_2$ are greater than 0, which needs to be determined according to the communication scenario and the wireless environment.

2. The number of sub-vectors decreases as the number of transmission layers increases.

Although for the same MIMO array, a larger number of sub-vectors of the column vectors in the codeword lead to more accurate channel characterization, the corresponding feedback overhead also increases because the feedback information must include indication information for the sub-vectors of each column vector. Furthermore, an overhead imbalance issue may exist in the feedback of codebooks for different numbers of layers. For example, when the number of sub-vectors of the column vectors in the codeword for two-layer transmission is 4 while the number of sub-vectors of the column vectors in the codeword for three-layer transmission is 6, according to the above column vector model, up to 16 and 24 pieces of indication information are required respectively to determine the selected codeword. As can be seen, the feedback overhead for feeding back indication information of the codewords for different numbers of transmission layers varies. Since feedback information in standards is generally of a fixed format and fixed length, this imbalance may lead to some resource waste. Although the correlation relationship between sub-vectors in the column vector model provided by the present application can reduce part of the feedback overhead, the overhead imbalance issue remains unresolved. Therefore, a balance must be struck between the transmission performance and the feedback overhead. Based on the above consideration, a feasible subarray division strategy is to make the number of subarrays inversely proportional to the number of transmission layers.

In an embodiment, the number K of sub-vectors and the number r of transmission layers satisfy the following relationship:

$$K = c - d*r.$$

In the above formula, c and d are preset constants, d is a constant greater than 0, and r is an integer greater than or equal to 1. For example, when c = 14 and d = 1, the relationship between the number of sub-vectors of column vectors in the codeword and r is shown in Table 2.

Table 2 Example table showing the number K of sub-vectors decreasing with the number r of transmission layers.

| The number r of transmission layers | 1 | 2 | 3 | 4 | 5 | 6 | 7 | 8 |
|---|---|---|---|---|---|---|---|---|
| The number K of sub-vectors | 13 | 12 | 11 | 10 | 9 | 8 | 7 | 6 |

The number of sub-vectors linearly decreases with the number of transmission layers in Table 2. Even without compressing the feedback indication information, the feedback overhead remains inadequately balanced. If a more consistent length of feedback indication information is required, K and r may satisfy the following inversely proportional relationship:

$$K = e + ceil(f/r).$$

In the above formula, e and f are preset constants, f is a constant greater than 0, r is an integer greater than or equal to 1, and the function ceil(x) represents rounding x up. For example, when e = 0 and f = 24, the relationship between the number of sub-vectors of column vectors in the codeword and r is shown in Table 3.

Table 3 Example table showing the number of sub-vectors decreasing with the number r of transmission layers.

| The number r of transmission layers | 1 | 2 | 3 | 4 | 5 | 6 | 7 | 8 |
|---|---|---|---|---|---|---|---|---|
| The number K of sub-vectors | 24 | 12 | 8 | 6 | 5 | 4 | 3 | 3 |

As can be seen from Table 3, the feedback overhead (K*r) at this point has achieved a good balance for the transmission with different layer numbers.

Of course, in practical application, K may also nonlinearly decrease with r, such as $K = a_3/r^2$ or $K = a_4/r^3$, where $a_3$ and $a_4$ are greater than 0, which needs to be determined according to the communication scenario and the wireless environment.

4. The number K of sub-vectors is determined according to a value set of the number r of transmission layers.

As can be observed from Tables 1 to 3, different numbers of transmission layers require different numbers of sub-vectors, and thus, a very large number of codewords need to be designed. Consequently, an excessively large codebook size occurs, and the time required for codeword selection is increased, which is unfavorable for reducing the feedback delay. Therefore, in another embodiment, the number of transmission layers is divided into multiple intervals, and each value set of r adopts the same number of sub-vectors. Table 4 shows the mapping relationship between the number of transmission layers and the number of sub-vectors.

Table 4 Example table of the number K of sub-vectors being determined according to the value set of r.

| The value set of r | [1] | [2, 3, 4] | [5, 6, 7, 8] | [9, 10, 11, 12, 13, 14, 15, 16] |
|---|---|---|---|---|
| The number K of sub-vectors | 20 | 12 | 8 | 4 |

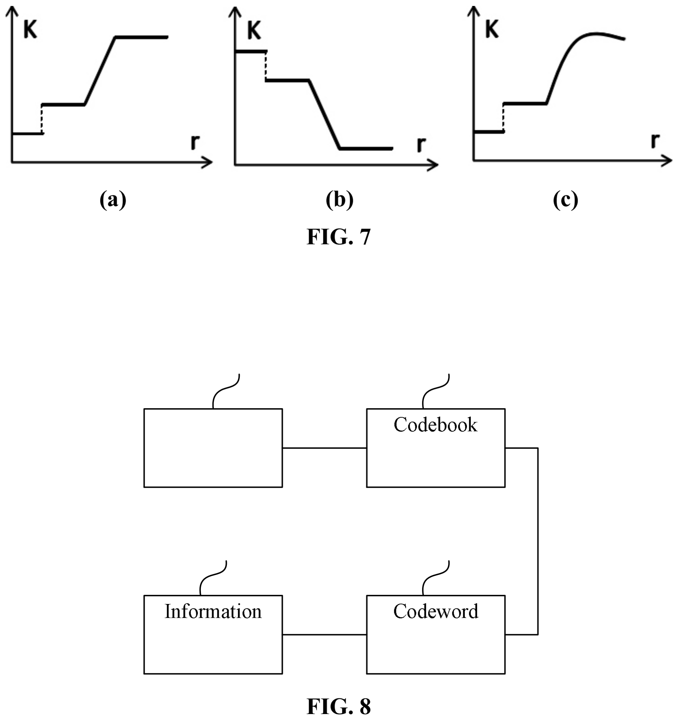

In more complex communication scenarios, the relationship between the number K of sub-vectors and the number r of transmission layers may vary segmentally. FIG. 7 illustrates several types of relationships where the number K of sub-vectors is determined according to the number r of transmission layers.

5. The value set of the number K of sub-vectors is determined according to the number r of transmission layers.

In some communication scenarios, the basis vectors used for constructing codewords with the same number of transmission layers may be selected from a group of basis vector sets, that is, the codewords with the same number of transmission layers may be constructed by the basis vectors including different numbers of sub-vectors, and the value set of the number of sub-vectors in these basis vectors is determined according to the number r of transmission layers. Table 5 provides an example of the embodiments here.

Table 5 Example table of the value set of the number of sub-vectors of the basis vector being determined according to the value of r.

| r | 1 | 2 | 3 | 4 | 5 | 6 |
|---|---|---|---|---|---|---|
| The value set of K | [2, 3, 4] | [2, 3, 4] | [2, 4, 6] | [4, 8] | [10] | [4, 6, 8, 10] |

The codeword in the embodiments of the present application may be constructed according to the basis vector model, and the codeword is a matrix of N rows and r columns and includes r column vectors $V_1$, $V_2$, ..., and $V_r$ having a length of N, where N > 1, and the value of r may be constructed according to the basis vector model. The basis vector model is expressed as follows:

$$u = \begin{bmatrix} \alpha_1 v_1 \\ \alpha_2 v_2 \\ \vdots \\ \alpha_K v_K \end{bmatrix}.$$

The basis vector model may include the sub-vector $v_k$ and the sub-vector coefficient $\alpha_k$, where k = 1, 2, ..., K. The length of the sub-vector $v_k$ is $N_k$, and the sum of the lengths of the sub-vectors is N. Each sub-vector in the basis vector model may correspond to a precoding matrix of one subarray. The sub-vector $v_k$ represents a precoding vector used for array beam control, and the MIMO array may radiate a directional beam in a specified direction or a group of directional beams in specified directions based on the precoding vector. The sub-vector coefficient $\alpha_k$ may be used for achieving the phase alignment of different subarrays in the MIMO array. The products of the sub-vectors and the corresponding sub-vector coefficients may be used as the actual precoding vectors for the subarrays in the MIMO array. The basis vector model may satisfy the following conditions: a sub-vector may be determined according to another sub-vector; a sub-vector may be determined according to a sub-vector coefficient; a sub-vector coefficient may be determined according to another sub-vector coefficient; and a sub-vector coefficient may be determined according to a sub-vector.

In the embodiments of the present application, the basis vector model u may include sub-vectors and sub-vector coefficients, and the sub-vectors in the basis vector model may have different forms.

1. The k-th sub-vector $v_k$ of the basis vector model u has the following form:

$$v_k = \begin{cases} \begin{bmatrix} 1 & e^{j\theta_k} & \cdots & e^{j(N_k-1)\theta_k} \end{bmatrix}^T, & N_k > 1, \\ 1, & N_k = 1, \end{cases}$$

where $\theta_k$ is a real number, j is an imaginary unit, and the superscript T represents transpose.

2. The k-th sub-vector $v_k$ of the basis vector model u has the following form:

$$v_k = \begin{cases} \begin{bmatrix} 1 & e^{j\theta_k^{(1)}} & \cdots & e^{j\theta_k^{(N_k-1)}} \end{bmatrix}, & N_k > 1, \\ 1, & N_k = 1, \end{cases}$$

where $\theta_k^{(n)} = \xi_k + n\eta_k + n^2\zeta_k$, $\xi_k$, $\eta_k$ and $\zeta_k$ are preset real-valued constants, j is an imaginary unit, and $1 \le n \le N_k$.

3. The k-th sub-vector $v_k$ of the basis vector model u is formed by the Kronecker product of two basis vectors $v_{k1}$ and $v_{k2}$:

$$v_k = v_{k1} \otimes v_{k2}.$$

In the above formula, the operator $\otimes$ represents a Kronecker product, and $v_{k1}$ and $v_{k2}$ represent two basis vectors and may adopt the following forms, respectively:

$$v_{k1} = \begin{cases} \begin{bmatrix} 1 & e^{j\theta_{k1}} & \cdots & e^{j(N_{k1}-1)\theta_{k1}} \end{bmatrix}^T, & N_{k1} > 1, \\ 1, & N_{k1} = 1, \end{cases}$$

$$v_{k2} = \begin{cases} \begin{bmatrix} 1 & e^{j\theta_{k2}} & \cdots & e^{j(N_{k2}-1)\theta_{k2}} \end{bmatrix}^T, & N_{k2} > 1, \\ 1, & N_{k2} = 1, \end{cases}$$

where $\theta_{k1}$ and $\theta_{k2}$ are given constants, $N_k = N_{k1}*N_{k2}$, and j is an imaginary unit.

4. The k-th sub-vector $v_k$ of the basis vector model u is formed by the Kronecker product of two basis vectors $v_{k1}$ and $v_{k2}$:

$$v_k = v_{k1} \otimes v_{k2}.$$

In the above formula, the operator $\otimes$ represents a Kronecker product, and $v_{k1}$ and $v_{k2}$ represent two basis vectors and may adopt the following forms, respectively:

$$v_{k1} = \begin{cases} \begin{bmatrix} 1 & e^{j\theta_{k1}^{(1)}} & \cdots & e^{j\theta_{k1}^{(N_{k1}-1)}} \end{bmatrix}, & N_{k1} > 1, \\ 1, & N_{k1} = 1, \end{cases}$$

$$v_{k2} = \begin{cases} \begin{bmatrix} 1 & e^{j\theta_{k2}^{(1)}} & \cdots & e^{j\theta_{k2}^{(N_{k2}-1)}} \end{bmatrix}, & N_{k2} > 1, \\ 1, & N_{k2} = 1, \end{cases}$$

where $\theta_{kl}^{(n)} = \xi_{kl} + n\eta_{kl} + n^2\zeta_{kl}$, $\xi_{kl}$, $\eta_{kl}$, and $\zeta_{k1}$ are preset real-valued constants, j is an imaginary unit, $l \in [1, 2]$, $1 \le n \le N_{k1}$, and $N_{k1}*N_{k2} = N_k$.

The coefficient $\alpha_k$ in the basis vector model is used for determining the initial phase and amplitude of a k-th sub-block precoding $v_m$. The coefficient $\alpha_k$ in the basis vector model may be written in an exponential form, $\alpha_k = \alpha_k e^{j\varphi_k}$, where $\alpha_k$ is the amplitude of the coefficient, and $\varphi_k$ is the phase of the coefficient. In some embodiments of the present application, $\alpha_m$ may be fixed as a unit amplitude, that is, $\alpha_m = e^{j\varphi_m}$, and is a unit complex number. The coefficients of the sub-vectors may determine the initial phase of the subarrays, and the coefficient $\alpha_1$ may determine the arrival phase at a receiving point when the column vector V is used as the precoding. Under general conditions, presetting $\alpha_1 = 1$ may be considered to simplify the model and reduce feedback overhead. However, in some complex scenarios, configuring an appropriate $\alpha_1$ is necessary to achieve better beamforming gain.

In the embodiments of the present application, the sub-vectors and the sub-vector coefficients in the basis vector model u may have a correlation relationship. Specifically, the sub-vectors and the sub-vector coefficients in the basis vector model u may constitute the set FS. The sub-set $FS_1$ in the set $FS = [v_1, v_2, ..., v_K, \alpha_1, \alpha_2, ..., \alpha_K]$ may be used for determining the sub-set $FS_2$ in the set FS.

Due to the existence of a well-defined spatial positional relationship between subarrays, the correlation relationship between subarray precoding may be derived according to the positional relationship. Consequently, a defined correlation relationship exists between the sub-vectors and their corresponding coefficients in the basis vector model u. According to a selected precoding type, the remaining parts of the basis vector model u may be determined according to a part of the sub-vectors/sub-vector coefficients.

In an embodiment, the k-th sub-vector coefficient $\alpha_k$ of the basis vector model u is determined according to at least one matrix and one coefficient in the set $[v_1, v_2, ..., v_k, \alpha_1, \alpha_2, ..., \alpha_{k-1}]$.

For example, $\alpha_1$ is a preset value, and the k-th coefficient $\alpha_k$ is determined according to $\alpha_{k-1}$ and $v_{k-1}$, where $2 \le k \le K$. For example, according to $v_{k-1}$ and its coefficient, the coefficient of the k-th sub-vector may be determined as:

$$\alpha_k = \alpha_{k-1} e^{j\arg(v_{k-1,N_{k-1}})} e^{j\beta}.$$

In the above formula, $\beta$ is a preset constant. For another example, the coefficient is determined according to $v_{k-1}$ and its coefficient through the following formula:

$$\alpha_k = \alpha_{k-1} e^{j \arg(v_{k-1}[N_{k-1}])} e^{j\Delta\phi_{k-1}} e^{j\beta} .$$

In the above formula, $\Delta\phi_{k-1} = \arg(v_{k-1,s}) - \arg(v_{k-1,s-1})$ represents the phase difference between any two adjacent elements in $v_{k-1}$, and $1 \leq s \leq N_{k-1}$.

In another example embodiment, $\alpha_k$ is determined according to $\alpha_{k-1}$, $v_{k-1}$ and $v_k$. For example, $\alpha_k$ may be determined through the following formula:

$$\alpha_k = \alpha_{k-1} e^{j \arg(v_{k-1,N_{k-1}})} e^{j\Delta\phi_k} e^{j\beta} .$$

In the above formula, $\Delta\phi_{k-1} = \arg(v_{k,s}) - \arg(v_{k,s-1})$ represents the phase difference between any two adjacent elements in $v_k$, and $\beta$ is a preset constant. For another example, $\alpha_k$ may be determined through the following formula:

$$\alpha_k = \alpha_{k-1} e^{j \arg(v_{k-1,N_{k-1}})} e^{j(\Delta\phi_{k-1}+\Delta\phi_k)/2} e^{j\beta} .$$

In the above formula, $\Delta\phi_{k-1}$ and $\Delta\phi_k$ represent the phase differences between any two adjacent elements in $v_{k-1}$ and $v_k$, respectively.

In another embodiment, the k-th sub-vector of the column vector V may be determined according to at least one matrix and one coefficient in $[v_1, v_2, ..., v_{k-1}, \alpha_1, \alpha_2, ..., \alpha_k]$. For example, the k-th sub-vector coefficient of the basis vector model u may be written in the form of $\alpha_k = a_k e^{j(\varphi k1 + \varphi k2)}$, and a (k-1)-th sub-vector $v_{k-1} = [1, e^{j\varphi k1}, e^{j2\varphi k1}, \cdots, e^{j(Nk-1-1)\varphi k1}]^T$ may be determined according to the parameter $\varphi_{k1}$ of the coefficient. In another scenario, the k-th coefficient of the basis vector model u may be written as $\alpha_k = a_k e^{j(\varphi k1 + \varphi k2 + \varphi k3)}$, and the sub-vectors $v_{k-1} = [1, e^{j\varphi k1}, e^{j2\varphi k1}, \cdots, e^{j(Nk-1-1)\varphi k1}]^T$ and $v_k = [1, e^{j\varphi k2}, e^{j2\varphi k2}, \cdots, e^{j(Nk-1)\varphi k2}]^T$ may be determined according to the parameters $\varphi_{k1}$ and $\varphi_{k2}$ of the coefficient, respectively, where $2 \leq k \leq K$.

In the above embodiments, the preset phase $\beta$ may be a pre-determined constant. For example, $\beta$ may be set to be equal to 0 in some cases, $\beta$ may be set to be equal to $\pi$ in other cases, or $\beta$ may be set to other constants according to the actual situation. In some other cases, $\beta$ may also be determined according to the indication information or the received configuration information.

In the embodiments of the present application, the lengths of the sub-vectors in the basis vector model u may be the same or different.

In some embodiments of the present application, the sub-vectors in the basis vector model u have the same length. Enabling the sub-vectors to have the same length brings the advantages of the simplification of the codeword model, no need for excessive configuration parameters during the generation of codewords, relatively fixed subarray division, and simpler engineering implementation, but may introduce some performance loss in near-field communication.

In some other embodiments, at least one sub-vector in the basis vector model u has a length different from the others. Correspondingly, at least two subarrays on the MIMO array include different numbers of antenna elements, as shown in FIG. 6(a) and FIG. 6(b). In the embodiments of the present application, using the sub-vectors of different lengths can further improve the accuracy of channel characterization and bring higher gain to the MIMO array.

In the embodiments of the present application, the codeword includes r column vectors. Each column vector may be constructed according to the basis vector model. The manner of constructing column vectors provided in the embodiments of the present application may include at least one of the following.

1. The column vectors of the codeword W satisfy the basis vector model u, that is, the i-th column vector $V_i$ of the codeword W is:

$$V_i = u_i = \begin{bmatrix} \alpha_{i1} v_{i1} \\ \alpha_{i2} v_{i2} \\ \vdots \\ \alpha_{iK} v_{iK} \end{bmatrix} .$$

In the above formula, $u_i$ satisfies the structure of the basis vector model u, and i = 1, 2, ..., r.

2. The i-th column vector $V_i$ of the codeword W is formed by the Kronecker product of two vectors $u_{i1}$ and $u_{i2}$, that is, $V_i =$

$u_{i1} \otimes u_{i2}$, where $u_{i1}$ and $u_{i2}$ satisfy the structure of the basis vector model u:

$$u_{i1} = \begin{bmatrix} \alpha_{i1,1}v_{i1,1} \\ \alpha_{i1,2}v_{i1,2} \\ \vdots \\ \alpha_{i1,K1}v_{i1,K1} \end{bmatrix}, u_{i2} = \begin{bmatrix} \alpha_{i2,1}v_{i2,1} \\ \alpha_{i2,2}v_{i2,2} \\ \vdots \\ \alpha_{i2,K2}v_{i2,K2} \end{bmatrix}.$$

In the above formulas, $K_1 \geq 1$, and $K_2 \geq 1$.

3. The i-th column vector $V_i$ of the codeword W is generated by a weighted sum of M column vectors:

$$V_i = \sum_{m=1}^{M} \beta_m u_m .$$

In the above formula, $\beta_m$ is a weight coefficient, and $u_m$ satisfies the structure of the basis vector model u:

$$u_m = \begin{bmatrix} \alpha_{m1}v_{m1} \\ \alpha_{m2}v_{m2} \\ \vdots \\ \alpha_{mK_m}v_{mK_m} \end{bmatrix}.$$

In the above formula, m = 1, 2, ..., M, and $K_m$ is the number of sub-vectors of $u_m$.

4. The i-th column vector $V_i$ of the codeword W is generated by a weighted sum of M column vectors:

$$V_i = \sum_{m=1}^{M} \beta_m u_m .$$

In the above formula, $\beta_m$ is a weight coefficient, $u_m$ is formed by the Kronecker product of two column vectors $u_{m1}$ and $u_{m2}$, $u_{m1}$ and $u_{m2}$ are column vectors satisfying the basis vector model u, i = 1, 2, ..., r, and m = 1, 2, ..., M.

5. The i-th column vector $V_i$ of the codeword W is constructed by S column vectors, in the following form:

$$V_i = \begin{bmatrix} c_1 V_{i1} \\ c_2 V_{i2} \\ \vdots \\ c_S V_{iS} \end{bmatrix}.$$

In the above formula, $c_s$ is a preset coefficient, $V_{iS}$ is constructed in at least one of the above constructing manners, S > 1, and $1 \leq s \leq S$. The manner for generating the sub-vector $V_{iS}$ through the basis vector model includes at least one of the following: a vector corresponding to the basis vector model is directly taken as a sub-vector; the Kronecker product of two vectors satisfying the basis vector model is taken as a sub-vector; the weighted sum of multiple vectors satisfying the basis vector model is taken as a sub-vector; or the weighted sum of multiple vectors is taken as a sub-vector, where each vector is the Kronecker product of two vectors satisfying the basis vector model.

The codewords constructed according to the above column vector model may be used for forming a precoding codebook for MIMO array beam control, and one codeword is selected to configure the precoding of the MIMO array to enable the MIMO array to radiate electromagnetic signals to one specified direction or a group of specified directions, thereby achieving beam control for the MIMO array.

In S4, indication information corresponding to the selected codeword is fed back to the first communication node.

A codeword includes one or more precoding vectors. Directly feeding back the codeword to the first communication node may incur significant channel resource overhead, thereby wasting time-frequency resources. Therefore, only the indication information corresponding to the selected codeword is fed back to the first communication node. The indication information is used for indicating the selected codeword, and the first communication node may select the corresponding codeword from the codebook according to the indication information for precoding configuration. The indication information may be numerical values or identifiers, and the numerical values or identifiers are used for labelling the codewords.

Since each column vector in the codeword model provided by the present application includes the basis vectors used for constructing the column vector and these basis vectors include sub-vectors and their coefficients which have a correlation relationship, determining a part of the sub-vectors and their coefficients allows the determination of the remainder. Therefore, an indication parameter of at least one indication parameter in the indication information may simultaneously indicate multiple elements in the codeword. The indication parameter here may be a single indicator index or a group of indicator indices. For example, [1, 1] in $W_{1,1;2,4}^{(2)}$ may represent two separate indication parameters or a single indication parameter.

In an embodiment, the column vectors of the codeword satisfy the form of the basis vector model u. The indication information of the codeword includes at least one indication parameter, and an indication parameter simultaneously indicates at least two elements in the set FS, where FS is a set including the sub-vectors and sub-vector coefficients of one column vector of the codeword. For example, a codeword may satisfy the following form:

$$W_{a,b;l,m,n;c,d;p,q}^{(s)} = \begin{pmatrix} V_1 & V_2 \end{pmatrix} = \begin{pmatrix} \alpha_a v_l & \alpha_c v_p \\ \alpha_b v_m & \alpha_d v_p \\ \alpha_b v_n & \alpha_q v_q \end{pmatrix}.$$

In the above formula, both the column vectors $V_1 = (\alpha_a v_1, \alpha_b v_1, \alpha_c v_m)^T$ and $V_2 = (\alpha_d v_p, \alpha_e v_p, \alpha_f v_q)^T$ satisfy the form of the basis vector model u. Such a form of the codeword indicates that the codeword supports 2-layer transmission, and the precoding vector in each transmission layer includes three sub-vectors, that is, understandably, the MIMO array is divided into three subarrays.

The indication information of the codeword includes the superscript s, which indicates the codebook information, and the subscripts a, b, 1, m, n, c, d, p and q, which indicate the column vector information of the codeword. The indication parameter b simultaneously indicates the last two sub-coefficients of the column vector $V_1$ of the codeword, the indication parameter p simultaneously indicates the first two sub-vectors of the column vector $V_2$ of the codeword, and the indication parameter q simultaneously indicates the last sub-vector and its corresponding coefficient. In more general cases, a single indication parameter in the indication information may indicate two or more elements in the set FS.

In another embodiment, the column vectors of the codeword may be formed by the Kronecker product of two vectors satisfying the basis vector model u. For example, the i-th column vector of a codeword may be expressed in the following form:

$$V_i = u_1 \otimes u_2 = \begin{pmatrix} \alpha_{11} v_{11} \\ \alpha_{12} v_{21} \\ \alpha_{13} v_{31} \end{pmatrix} \otimes \begin{pmatrix} \alpha_{21} v_{21} \\ \alpha_{22} v_{22} \\ \alpha_{23} v_{23} \end{pmatrix}.$$

According to the correlation relationship between the sub-vectors and the sub-vector coefficients in the basis vector model, an indication parameter of at least one parameter in the indication information may indicate two elements in the set FS, where the set FS includes sub-vectors and sub-vector coefficients in either $u_1$ or $u_2$.

In another embodiment, the column vectors of the codeword may be obtained by a weighted sum of several column vectors satisfying the basis vector model u. For example, the i-th column vector of a codeword is as follows:

$$V_i = 0.6u_1 + 0.3u_2 + 0.1u_3 = 0.6\begin{pmatrix} \alpha_{11} v_{11} \\ \alpha_{12} v_{21} \end{pmatrix} + 0.3\begin{pmatrix} \alpha_{21} v_{21} \\ \alpha_{22} v_{22} \end{pmatrix} + 0.1\begin{pmatrix} \alpha_{31} v_{31} \\ \alpha_{32} v_{32} \end{pmatrix}.$$

In the above formula, 0.6, 0.3 and 0.1 are preset weight coefficients, and $u_1$, $u_2$ and $u_3$ satisfy the basis vector model u and each includes two sub-vectors. The indication information fed back needs to include the indication information of $u_1$, $u_2$ and $u_3$, and an indication parameter of at least one parameter in the indication information may indicate two elements in the set FS, where the set FS includes sub-vectors and sub-vector coefficients in $u_1$, $u_2$ or $u_3$.

In another embodiment, the column vectors of the codeword may be obtained by a weighted sum of multiple column vectors, where each column vector is formed from the Kronecker product of two vectors satisfying the basis vector model u. For example, the i-th column vector of a codeword may be obtained in the following manner:

$$V_i = 0.6V_{i1} + 0.4V_{i2} = 0.6u_{11} \otimes u_{12} + 0.4u_{21} \otimes u_{22}.$$

In the above formula, 0.6 and 0.4 are weight coefficients, and $u_{11}$, $u_{12}$, $u_{21}$ and $u_{22}$ satisfy the basis vector model u. The indication information fed back needs to include the indication information of $u_{11}$, $u_{12}$, $u_{21}$ and $u_{22}$, and an indication parameter of at least one parameter in the indication information may indicate two elements in the set FS, where the set FS includes sub-vectors and sub-vector coefficients in $u_{11}$, $u_{12}$, $u_{21}$ or $u_{22}$.

In another embodiment, a column vector of the codeword includes multiple sub-vectors, and each sub-vector may be constructed using one of the methods described in the preceding three embodiments. Correspondingly, the indication information fed back needs to include the indication information of all basis vectors used for constructing the column vector, and an indication parameter of at least one parameter in the indication information may indicate two elements in the set FS, where the set FS includes sub-vectors and sub-vector coefficients of one of the basis vectors used for constructing the column vector.

In the embodiments of the present application, in practical engineering applications, the indication parameter may be further compressed and encoded before being fed back to the first communication node to reduce feedback overhead. The first communication node decompresses the received information to obtain the required indication information and then determines the selected codeword according to the indication information.

Due to the correlation between sub-vectors and their coefficients in the basis vector model u, the feedback method may utilize fewer indication parameters for channel feedback, thereby reducing time-frequency resource overhead. Additionally, decomposing the column vectors in the codeword into multiple sub-vectors is more suitable for near-field communication, and by utilizing the plane-wave model of subarrays to approximate the near-field spherical-wave model, can provide more granular channel information compared to precoding schemes, thereby leading to greater beamforming gain.

FIG. 8 is a structure diagram of a channel information feedback apparatus according to an embodiment of the present application. The apparatus may perform the channel information feedback method provided in any embodiment of the present application and has function modules and beneficial effects corresponding to the performed method. The apparatus may be implemented by software and/or hardware. As shown in FIG. 8, the apparatus provided in the embodiments of the present application includes a channel measurement module 301, a codebook determination module 302, a codeword determination module 303 and an information feedback module 304.

The channel measurement module 301 is configured to determine a measurement result of channel state information according to a measured reference signal.

The codebook determination module 302 is configured to determine a codebook, where the codebook includes a sub-codebook for r transmission layers, where r = 1, 2, ..., R, and R is a positive integer.

The codeword determination module 303 is configured to determine a codeword W from the codebook.

The information feedback module 304 is configured to feed back indication information of the codeword W, where the codeword W is a matrix of N rows and r columns formed by r column vectors $V_1$, $V_2$, ..., $V_r$ having a length of N, N > 1, and $r \geq 1$; the r column vectors of the codeword W are constructed according to the following basis vector model:

$$u = \begin{bmatrix} \alpha_1 v_1 \\ \alpha_2 v_2 \\ \alpha_3 v_3 \\ \vdots \\ \alpha_K v_K \end{bmatrix}.$$

The basis vector model u includes K sub-vectors, the length of a k-th sub-vector $v_k$ is $N_k$, $\alpha_k$ is a sub-vector coefficient, $K \geq 1$, $1 \leq k \leq K$, $N_k \geq 1$, and the value of K is determined according to the value of r.

In some embodiments of the present application, channel measurement module 301 is specifically configured to determine the number r of transmission layers according to the measurement result or a configuration signaling and select the codeword from the sub-codebook corresponding to the number r of transmission layers.

In some embodiments of the present application, the codebook includes at least two sub-codebooks $CB_{r1}$ and $CB_{r2}$, and the sub-codebook $CB_{r1}$ and the sub-codebook $CB_{r2}$ satisfy: at least one column vector of a codeword in the sub-

codebook CB$_{r1}$ is constructed according to a basis vector u$_1$, the basis vector u$_1$ includes K$_1$ sub-vectors, at least one column vector of a codeword in the sub-codebook CB$_{r2}$ is constructed according to a basis vector u$_2$, and the basis vector u$_2$ includes K$_2$ sub-vectors, where r$_1$ is not equal to r$_2$, K$_1$ is not equal to K$_2$, and the basis vector u$_1$ and the basis vector u$_2$ satisfy the basis vector model u.

In some embodiments of the present application, r$_1$ is greater than r$_2$, and K$_1$ corresponding to r$_1$ is less than K$_2$ corresponding to r$_2$.

In some embodiments of the present application, the number K of sub-vectors linearly increases with the number r of transmission layers, and K = a + b*r, where a is a preset real number, and b is greater than 0.

In some embodiments of the present application, the number K of sub-vectors nonlinearly increases with the number r of transmission layers, and K = f$_1$(r), where f$_1$(r) is a nonlinear monotonically increasing function, and r > 0.

In some embodiments of the present application, r$_1$ is greater than r$_2$, and K$_1$ corresponding to r$_1$ is greater than K$_2$ corresponding to r$_2$.

In some embodiments of the present application, the number K of sub-vectors nonlinearly decreases with the number r of transmission layers, and K = f$_2$(r), where f$_2$(r) is a nonlinear monotonically decreasing function, and r > 0.

In some embodiments of the present application, the operation where the value of K is determined according to the value of r includes: the value of K is determined according to a value set of r.

In some embodiments of the present application, the operation where the value of K is determined according to the value of r includes: a value set of K is determined according to the value of r.

In some embodiments of the present application, the basis vector module u satisfies the following relationship: at least one subset FS$_1$ of a set FS = [v$_1$, v$_2$, ..., v$_k$, $\alpha_1$, $\alpha_2$, ..., $\alpha_K$] is determined according to a subset FS$_2$, where i = 1, 2, ..., K. The set FS includes a sub-vector coefficient $\alpha_i$ and a sub-vector v$_i$ in the basis vector model u.

In some embodiments of the present application, the indication information includes at least one indication parameter for a sub-vector and a sub-vector coefficient in the basis vector model u.

In some embodiments of the present application, an indication parameter of the at least one indication parameter simultaneously indicates two elements in the set FS, where i = 1, 2, ..., K. The set FS includes the sub-vector coefficient $\alpha_i$ and the sub-vector v$_i$ in the basis vector model u.

In some embodiments of the present application, the sub-vectors in the basis vector model u have the same length.

In some embodiments of the present application, the lengths of at least two sub-vectors in the basis vector model u are different.

In some embodiments of the present application, the k-th sub-vector v$_k$ of the basis vector model u satisfies the following form:

$$v_k = \begin{cases} \begin{bmatrix} 1 & e^{j\theta_k} & \cdots & e^{j(N_k-1)\theta_k} \end{bmatrix}, & N_k > 1, \\ 1, & N_k = 1, \end{cases}$$

where $\theta_k$ is a real number, and j is an imaginary unit.

In some embodiments of the present application, the k-th sub-vector v$_k$ of the basis vector model u is formed by the Kronecker product of two basis vectors v$_{k1}$ and v$_{k2}$, where the two basis vectors each satisfy the following form:

$$v_k = \begin{cases} \begin{bmatrix} 1 & e^{j\theta_k^{(1)}} & \cdots & e^{j\theta_k^{(N_k-1)}} \end{bmatrix}, & N_k > 1, \\ 1, & N_k = 1, \end{cases}$$

where $\theta_{k1}$ is a real number, j is an imaginary unit, E [1, 2], and N$_{k1}$ *N$_{k2}$ = N$_k$.

In some embodiments of the present application, the k-th sub-vector v$_k$ of the basis vector model u satisfies the following form:

$$v_k = \begin{cases} \begin{bmatrix} 1 & e^{j\theta_k^{(1)}} & \cdots & e^{j\theta_k^{(N_k-1)}} \end{bmatrix}, & N_k > 1, \\ 1, & N_k = 1, \end{cases}$$

where $\theta_k^{(n)} = \xi_k + n\eta_k + n^2\zeta_k$, $\xi_k$, $\eta_k$ and $\zeta_k$ are preset real-valued constants, j is an imaginary unit, and $1 \leq n \leq N_k$.

In some embodiments of the present application, the k-th sub-vector $v_k$ of the basis vector model u is formed by the Kronecker product of two basis vectors $v_{k1}$ and $v_{k2}$, where the two basis vectors each satisfy the following form:

$$v_k = \begin{cases} \begin{bmatrix} 1 & e^{j\theta_k^{(1)}} & \cdots & e^{j\theta_k^{(N_k-1)}} \end{bmatrix}, & N_k > 1, \\ 1, & N_k = 1, \end{cases}$$

where $\theta_{kl}^{(n)} = \xi_{kl} + n\eta_{kl} + n^2\zeta_{kl}$, $\xi_{k1}$, $\eta_{k1}$ and $\zeta_{k1}$ are preset real-valued constants, j is an imaginary unit, $1 \in [1, 2]$, $1 \le n \le N_{k1}$, and $N_{k1} * N_{k2} = N_k$.

In some embodiments of the present application, the i-th column vector $V_i$ of the codeword W is a column vector satisfying the basis vector model u, where i = 1, 2, ..., r.

In some embodiments of the present application, the i-th column vector $V_i$ of the codeword W is formed by the Kronecker product of two vectors $u_1$ and $u_2$, where $u_1$ and $u_2$ are column vectors satisfying the basis vector model u.

In some embodiments of the present application, the i-th column vector $V_i$ of the codeword W is generated by a weighted sum of M column vectors:

$$V_i = \sum_{m=1}^{M} \beta_m u_m .$$

In the above formula, $\beta_m$ is a weight coefficient, $u_m$ is a column vector satisfying the basis vector model u, i = 1, 2, ..., r, and m = 1, 2, ..., M.

In some embodiments of the present application, the i-th column vector $V_i$ of the codeword W is generated by a weighted sum of M column vectors:

$$V_i = \sum_{m=1}^{M} \beta_m w_m .$$

In the above formula, $\beta_m$ is a weight coefficient, $w_m$ is formed by the Kronecker product of two column vectors $u_{m1}$ and $u_{m2}$, $u_{m1}$ and $u_{m2}$ are column vectors satisfying the basis vector model u, i = 1, 2, ..., r, and m = 1, 2, ..., M.

In some embodiments of the present application, the i-th column vector $V_i$ of the codeword W satisfies the following form:

$$V_i = \begin{bmatrix} c_1 V_{i1} \\ c_2 V_{i2} \\ \vdots \\ c_S V_{iS} \end{bmatrix} .$$

In the above formula, $c_s$ is a coefficient, $V_{is}$ is a sub-vector, and $V_{is}$ is generated according to at least one of the following manners, where s = 1, 2, ..., S.

$V_{is}$ is directly generated according to the basis vector model u; $V_{is}$ is formed by the Kronecker product of two vectors $u_1$ and $u_2$, where $u_1$ and $u_2$ are column vectors satisfying the basis vector model u; $V_{is}$ is generated by a weighted sum of M column vectors of the basis vector model according to $V_{is} = \sum_{m=1}^{M} \beta_m u_m$, where $\beta_m$ is a weight coefficient, $u_m$ is a column vector satisfying the basis vector model u, i = 1, 2, ..., r, and m = 1, 2, ..., M; or $V_{is}$ is generated by a weighted sum of M column vectors of the basis vector model according to $V_{is} = \sum_{m=1}^{M} \beta_m w_m$, where $\beta_m$ is a weight coefficient, $w_m$ is formed by the Kronecker product of two column vectors $u_{m1}$ and $u_{m2}$, $u_{m1}$ and $u_{m2}$ are column vectors satisfying the basis vector model u, i = 1, 2, ..., r, and m = 1, 2, ..., M.

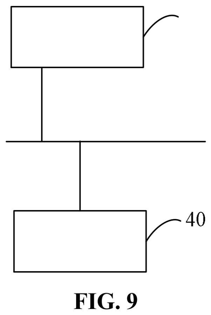

FIG. 9 is a structure diagram of an electronic device according to an embodiment of the present application. The electronic device includes a processor 40 and a memory 41. One or more processors 40 may be provided in the electronic device, and one processor 40 is shown as an example in FIG. 9. The processor 40 and the memory 41 in the electronic device may be connected via a bus or in other manners, and the connection via a bus is shown as an example in FIG. 9.

As a computer-readable storage medium, the memory 41 may be configured to store software programs, computer-executable programs and modules, such as programs corresponding to the channel information feedback method in any embodiment of the present application and modules corresponding to the channel information feedback apparatus in the embodiments of the present application (the channel measurement module 301, the codebook determination module 302, the codeword determination module 303 and the information feedback module 304). The processor 40 executes software programs, instructions, and modules stored in the memory 41 to perform various functions and data processing of the electronic device, that is, perform the channel information feedback method described above.

The memory 41 may mainly include a program storage region and a data storage region. The program storage region may store an operating system and an application program required by at least one function. The data storage region may store data created according to the use of the electronic device. Additionally, the memory 41 may include a high-speed random-access memory and may also include a nonvolatile memory such as at least one magnetic disk memory, a flash memory, or another nonvolatile solid-state memory. In some examples, the memory 41 may further include memories which are remotely disposed with respect to the processor 40. These remote memories may be connected to the electronic device via a network. Examples of the network include the Internet, an intranet, a local area network, a mobile communication network, and combinations thereof.

The embodiments of the present application further provide a storage medium including computer-executable instructions. When executed by a computer processor, the computer-executable instructions are used for causing the computer processor to perform a channel information feedback method. The method includes the following.

A measurement result of channel state information is determined according to a measured reference signal. A codebook is determined, where the codebook includes a sub-codebook for r transmission layers, where r = 1, 2, ..., R, and R is a positive integer. A codeword W is determined from the codebook. Indication information of the codeword W is fed back. The codeword W is a matrix of N rows and r columns formed by r column vectors $V_1, V_2, ..., V_r$ having a length of N, N > 1, and r $\geq$ 1. The r column vectors of the codeword W are constructed according to the following basis vector model:

$$u = \begin{bmatrix} \alpha_1 v_1 \\ \alpha_2 v_2 \\ \vdots \\ \alpha_K v_K \end{bmatrix}.$$

The basis vector model u includes K sub-vectors, the length of a k-th sub-vector $v_k$ is $N_k$, $\alpha_k$ is a sub-vector coefficient, $K \geq 1$, $1 \leq k \leq K$, $N_k \geq 1$, and the value of K is determined according to the value of r.

From the preceding description of embodiments, it is apparent to those skilled in the art that the present application may be implemented by software and necessary general-purpose hardware or may be implemented by hardware, and the former is a preferred implementation in many cases. Based on the above understanding, the solutions of the present application may substantially be embodied in the form of a software product. The computer software product may be stored in a computer-readable storage medium such as a floppy disk, a read-only memory (ROM), a random-access memory (RAM), a flash memory, a hard disk, or an optical disk of a computer and includes several instructions for causing a computer device (which may be a personal computer, a server or a network device) to perform the methods in the embodiments of the present application.

It is to be noted that units and modules included in the preceding embodiments of the apparatus are divided according to functional logic, and the division is not limited to this as long as the corresponding functions can be implemented. Additionally, the specific names of function units are used for distinguishing between each other and are not to limit the scope of the present application.

It is to be understood by those of ordinary skill in the art that some or all operations of the preceding method and function modules/units in the preceding apparatus or device may be implemented as software, firmware, hardware, and suitable combinations thereof.

In the hardware implementation, the division of the functional modules/units mentioned in the above description may not correspond to the division of physical components. For example, one physical component may have multiple functions, or one function or operation may be executed jointly by several physical components. Some or all physical components may be implemented as software executed by a processor such as a central processing unit, a digital signal processor or a microprocessor, may be implemented as hardware, or may be implemented as integrated circuits such as application-specific integrated circuits. The corresponding software may be distributed on computer-readable media. The computer-readable media may include computer storage media (or non-transitory media) and communication media (or transitory media). As is known to those of ordinary skill in the art, the term computer storage media includes volatile and nonvolatile media as well as removable and non-removable media implemented in any method or technology for storing information (such as computer-readable instructions, data structures, program modules, or other data). The computer storage media include, but are not limited to, a RAM, a ROM, an electrically erasable programmable read-only memory (EEPROM), a flash memory or other memory technologies, a compact disc read-only memory (CD-ROM), a digital versatile disc (DVD) or other optical disc memories, magnetic cassettes, magnetic tapes, magnetic disk memories or other magnetic storage apparatuses, or any other medium used for storing the desired information and accessible by a computer. Additionally, as is known to those of ordinary skill in the art, the communication media generally include computer-readable instructions, data structures, program modules or other data in a modulated data signal such as a carrier wave or other transport mechanisms and include any information delivery media.

**Claims**

1. A channel information feedback method, comprising:

   determining a measurement result of channel state information according to a measured reference signal;
   determining a codebook, wherein the codebook comprises a sub-codebook for r transmission layers, wherein r = 1, 2, ..., R, and R is a positive integer;
   determining a codeword W in the codebook; and
   feeding back indication information of the codeword W;
   wherein the codeword W is a matrix that has N rows and r columns and comprises r column vectors $V_1$, $V_2$, ..., $V_r$ having a length of N, N > 1, and r $\geq$ 1;
   the r column vectors of the codeword W are constructed according to the following basis vector model:

$$u = \begin{bmatrix} \alpha_1 v_1 \\ \alpha_2 v_2 \\ \vdots \\ \alpha_K v_K \end{bmatrix};$$

   wherein the basis vector model u includes K sub-vectors, a length of a k-th sub-vector $v_k$ is $N_k$, $\alpha_k$ is a sub-vector coefficient, K $\geq$ 1, 1 $\leq$ k $\leq$ K, $N_k \geq$ 1, and a value of K is determined according to a value of r.

2. The method of claim 1, wherein determining the codeword from the codebook comprises:
   determining the number r of transmission layers according to at least one of the measurement result or a configuration signaling, and selecting the codeword from the sub-codebook.

3. The method of claim 1, wherein the codebook comprises at least two sub-codebooks $CB_{r1}$ and $CB_{r2}$, and the sub-codebook $CB_{r1}$ and the sub-codebook $CB_{r2}$ satisfy: at least one column vector of a codeword in the sub-codebook $CB_{r1}$ is constructed according to a basis vector $u_1$, the basis vector $u_1$ comprises $K_1$ sub-vectors, at least one column vector of a codeword in the sub-codebook $CB_{r2}$ is constructed according to a basis vector $u_2$, and the basis vector $u_2$ comprises $K_2$ sub-vectors, wherein $r_1$ is not equal to $r_2$, $K_1$ is not equal to $K_2$, and the basis vector $u_1$ and the basis vector $u_2$ satisfy the basis vector model u.

4. The method of claim 3, wherein the number K of sub-vectors and the number r of transmission layers satisfy: $r_1$ is greater than $r_2$, and $K_1$ corresponding to $r_1$ is less than $K_2$ corresponding to $r_2$.

5. The method of claim 4, wherein the number K of sub-vectors linearly increases with the number r of transmission layers, and K = a + b*r, wherein a is a preset real number, and b is greater than 0.

6. The method of claim 4, wherein the number K of sub-vectors nonlinearly increases with the number r of transmission layers, and K = $f_l(r)$, wherein fi(r) is a nonlinear monotonically increasing function, and r > 0.

7. The method of claim 3, wherein the number K of sub-vectors and the number r of transmission layers satisfy: $r_y$ is greater than $r_2$, and $K_1$ corresponding to $r_1$ is greater than $K_2$ corresponding to $r_2$.

8. The method of claim 7, wherein the number K of sub-vectors linearly decreases with the number r of transmission layers, and K = c - d*r, wherein c is a preset real number, and d is greater than 0.

9. The method of claim 7, wherein the number K of sub-vectors nonlinearly decreases with the number r of transmission layers, and K = $f_2(r)$, wherein $f_2(r)$ is a nonlinear monotonically decreasing function, and r > 0.

10. The method of claim 1, wherein determining the value of K according to the value of r comprises:
   the value of K is determined according to a value set of r.

11. The method of claim 1, wherein determining the value of K according to the value of r comprises:
   a value set of K is determined according to the value of r.

12. The method of claim 1, wherein the basis vector module u satisfies a following relationship:
   at least one subset FS; of a set FS = [$v_1$, $v_2$, ..., $v_k$, $\alpha_1$, $a_2$, ..., $\alpha_K$] is determined according to a subset $FS_2$, wherein i = 1, 2, ..., K, and the set FS includes a sub-vector coefficient a; and a sub-vector $v_i$ in the basis vector model u.

13. The method of claim 1, wherein the indication information comprises at least one indication parameter for a sub-vector and a sub-vector coefficient in the basis vector model u.

14. The method of claim 12 or 13, wherein an indication parameter of the at least one indication parameter simultaneously indicates two elements in the set FS, wherein i = 1, 2, ..., K.

15. The method of claim 1, wherein sub-vectors in the basis vector model u have a same length.

16. The method of claim 1, wherein at least two sub-vectors of the K sub-vectors in the basis vector model u have different lengths.

17. The method of claim 1, wherein a k-th sub-vector $v_k$ of the basis vector model u satisfies a following form:

$$v_k = \begin{cases} \begin{bmatrix} 1 & e^{j\theta_k} & \cdots & e^{j(N_k-1)\theta_k} \end{bmatrix}, & N_k > 1, \\ 1, & N_k = 1, \end{cases}$$

wherein $\theta_k$ is a real number, and j is an imaginary unit.

18. The method of claim 1, wherein a k-th sub-vector $v_k$ of the basis vector model u is formed by a Kronecker product of two basis vectors $v_{k1}$ and $v_{k2}$, wherein the two basis vectors $v_{k1}$ and $v_{k2}$ each satisfy a following form:

$$v_k = \begin{cases} \begin{bmatrix} 1 & e^{j\theta_k^{(1)}} & \cdots & e^{j\theta_k^{(N_k-1)}} \end{bmatrix}, & N_k > 1, \\ 1, & N_k = 1, \end{cases}$$

wherein $\theta_{kl}$ is a real number, j is an imaginary unit, IE [1, 2], and $N_{k1}*N_{k2} = N_k$.

19. The method of claim 1, wherein a k-th sub-vector $v_k$ of the basis vector model u satisfies a following form:

$$v_k = \begin{cases} \begin{bmatrix} 1 & e^{j\theta_k^{(1)}} & \cdots & e^{j\theta_k^{(N_k-1)}} \end{bmatrix}, & N_k > 1, \\ 1, & N_k = 1, \end{cases}$$

wherein $\theta_k^{(n)} = \xi_k + n\eta_k + n^2\zeta_k$, $\xi_k$, $\eta_k$ and $\zeta_k$ are preset real-valued constants, j is an imaginary unit, and $1 \leq n \leq N_k$.

**20.** The method of claim 1, wherein a k-th sub-vector $v_k$ of the basis vector model u is formed by a Kronecker product of two basis vectors $v_{k1}$ and $v_{k2}$, wherein the two basis vectors $v_{k1}$ and $v_{k2}$ each satisfy a following form:

$$v_k = \begin{cases} \begin{bmatrix} 1 & e^{j\theta_k^{(1)}} & \cdots & e^{j\theta_k^{(N_k-1)}} \end{bmatrix}, & N_k > 1, \\ 1, & N_k = 1, \end{cases}$$

wherein $\theta_{kl}^{(n)} = \xi_{kl} + n\eta_{kl} + n^2\zeta_{kl}$, $\xi_{kl}$, $\eta_{kl}$ and $\zeta_{kl}$ are preset real-valued constants, j is an imaginary unit, $l \in [1, 2]$, $1 \le n \le N_{k1}$, and $N_{k1}*N_{k2} = N_k$.

**21.** The method of claim 1, wherein an i-th column vector $V_i$ of the codeword W is a column vector satisfying the basis vector model u, wherein i = 1, 2, ..., K.

**22.** The method of claim 1, wherein an i-th column vector $V_i$ of the codeword W is formed by a Kronecker product of two basis vectors $u_1$ and $u_2$ satisfying the basis vector model u, wherein i = 1, 2, ..., K.

**23.** The method of claim 1, wherein an i-th column vector $V_i$ of the codeword W is generated by a weighted sum of M column vectors:

$$V_i = \sum_{m=1}^{M} \beta_m u_m \, ;$$

wherein $\beta_m$ is a weight coefficient, $u_m$ is a column vector satisfying the basis vector model u, i = 1, 2, ..., r, and m = 1, 2, ..., M.

**24.** The method of claim 1, wherein an i-th column vector $V_i$ of the codeword W is generated by a weighted sum of M column vectors:

$$V_i = \sum_{m=1}^{M} \beta_m w_m \, ;$$

wherein $\beta_m$ is a weight coefficient, $w_m$ is formed by a Kronecker product of two column vectors $u_{m1}$ and $u_{m2}$, $u_{m1}$ and $u_{m2}$ are column vectors satisfying the basis vector model u, i = 1, 2, ..., r, and m = 1, 2, ..., M.

**25.** The method of claim 1, wherein an i-th column vector $V_i$ of the codeword W satisfies a following form:

$$V_i = \begin{bmatrix} c_1 V_{i1} \\ c_2 V_{i2} \\ \vdots \\ c_S V_{iS} \end{bmatrix} ;$$

wherein $c_s$ is a coefficient, $V_{is}$ is a sub-vector, and $V_{is}$ is generated according to at least one of following manners, wherein s = 1, 2, ..., S:

$V_{is}$ is directly generated according to the basis vector model u;

$V_{is}$ is formed by a Kronecker product of two vectors $u_1$ and $u_2$, wherein $u_1$ and $u_2$ are column vectors satisfying the basis vector model u;

$V_{is}$ is generated by a weighted sum of M column vectors of the basis vector model according to $V_{is} = \sum_{m=1}^{M} \beta_m u_m$ ,

wherein $\beta_m$ is a weight coefficient, $u_m$ is a column vector satisfying the basis vector model u, i = 1, 2, ..., r, and m = 1, 2, ..., M; or

$V_{is}$ is generated by a weighted sum of M column vectors of the basis vector model according to $V_{is} = \sum_{m=1}^{M} \beta_m w_m$,

wherein $\beta_m$ is a weight coefficient, $w_m$ is formed by a Kronecker product of two column vectors $u_{m1}$ and $u_{m2}$, $u_{m1}$ and $u_{m2}$ are column vectors satisfying the basis vector model u, i = 1, 2, ..., r, and m = 1, 2, ..., M.

26. An electronic device, comprising:

at least one processor; and
a memory configured to store at least one program;
wherein the at least one program, when executed by the at least one processor, causes the at least one processor to perform the channel information feedback method of any one of claims 1 to 25.

27. A computer-readable storage medium storing at least one program which, when executed by at least one processor, causes the at least one processor to perform the channel information feedback method of any one of claims 1 to 25.

The electromagnetic field is dominated by reactive components

Reactive near-field region

Radiating near-field region (Fresnel zone)

Far-field region (Fraunhofer region)

$\dfrac{\lambda}{2\pi}$

$0.62\sqrt{\dfrac{D^3}{\lambda}}$

$2\dfrac{D^2}{\lambda}$

**FIG. 1**

**FIG. 2**

**FIG. 3**

| | |
|---|---|
| Determine a measurement result of channel state information according to a measured reference signal | S110 |

↓

| | |
|---|---|
| Determine a codebook, wherein the codebook includes a sub-codebook, the number of layers of which is r, r = 1, 2, ..., R, and R is a positive integer | S120 |

↓

| | |
|---|---|
| Determine a codeword W from the codebook | S130 |

↓

| | |
|---|---|
| Feed back indication information of the codeword W | S140 |

**FIG. 4**

```
┌──────────────────────────────────────────────────────────┐ ,
│                                                          │ ⌇
│                                                          │
│                                                          │
└──────────────────────────────────────────────────────────┘
                              │
                              ▼
┌──────────────────────────────────────────────────────────┐
│ Determine a codebook CB used for feedback according to the │ ⌇
│                                                          │
└──────────────────────────────────────────────────────────┘
                              │
                              ▼
┌──────────────────────────────────────────────────────────┐
│                                                          │
│                                                        , │
│ determine a codeword from a selected codebook set for    │ ⌇
│                                                          │
└──────────────────────────────────────────────────────────┘
                              │
                              ▼
┌──────────────────────────────────────────────────────────┐
│                                                          │ ⌇
│                                                          │
└──────────────────────────────────────────────────────────┘
```

**FIG. 5**

(a)　　　　　　　　　(b)　　　　　　　　　(c)

**FIG. 6**

**(a)**   **(b)**   **(c)**

**FIG. 7**

Codebook

Information   Codeword

**FIG. 8**

**FIG. 9**

## INTERNATIONAL SEARCH REPORT

| | International application No. |
|---|---|
| | **PCT/CN2023/141412** |

| A. | CLASSIFICATION OF SUBJECT MATTER |
|---|---|

H04B 7/0456(2017.01)i

According to International Patent Classification (IPC) or to both national classification and IPC

| B. | FIELDS SEARCHED |
|---|---|

Minimum documentation searched (classification system followed by classification symbols)

IPC:H04W H04B H04Q

Documentation searched other than minimum documentation to the extent that such documents are included in the fields searched

Electronic data base consulted during the international search (name of data base and, where practicable, search terms used)

3GPP, CNTXT, ENTXTC, VEN: 波束, 赋形, 参考信号, 层数, 秩, 反馈, 基向量, 克罗内克, 向量, 码本, 子码本, 码字, 信道状态, 预编码, 指示信息, beamforming, RS, rank, vector, kronecker, codebook, codeword, CSI, precoding

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 114050854 A (ZTE CORP.) 15 February 2022 (2022-02-15)<br>description, paragraphs 142-182 | 1-27 |
| X | CN 110557176 A (ZTE CORP.) 10 December 2019 (2019-12-10)<br>description, paragraphs 24-85 | 1-27 |
| X | US 2019081669 A1 (HUAWEI TECHNOLOGIES CO., LTD.) 14 March 2019 (2019-03-14)<br>claims 1-9 | 1-27 |
| X | US 2020136692 A1 (ZTE CORP.) 30 April 2020 (2020-04-30)<br>description, paragraphs 149-190 | 1-27 |
| A | WO 2021249515 A1 (HUAWEI TECHNOLOGIES CO., LTD.) 16 December 2021<br>(2021-12-16)<br>entire document | 1-27 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **16 April 2024** | **19 April 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/141412**

| Patent document cited in search report | | | Publication date (day/month/year) | Patent family member(s) | | | Publication date (day/month/year) |
|---|---|---|---|---|---|---|---|
| CN | 114050854 | A | 15 February 2022 | None | | | |
| CN | 110557176 | A | 10 December 2019 | WO | 2019228354 | A1 | 05 December 2019 |
| | | | | EP | 3806343 | A1 | 14 April 2021 |
| | | | | US | 2021167833 | A1 | 03 June 2021 |
| US | 2019081669 | A1 | 14 March 2019 | EP | 3444960 | A1 | 20 February 2019 |
| | | | | WO | 2017194007 | A1 | 16 November 2017 |
| | | | | CN | 107395259 | A | 24 November 2017 |
| US | 2020136692 | A1 | 30 April 2020 | WO | 2018206016 | A1 | 15 November 2018 |
| | | | | US | 2023142160 | A1 | 11 May 2023 |
| WO | 2021249515 | A1 | 16 December 2021 | EP | 4156538 | A1 | 29 March 2023 |
| | | | | CN | 113810086 | A | 17 December 2021 |

Form PCT/ISA/210 (patent family annex) (July 2022)